# EUROPÄISCHE PATENTSCHRIFT

(11) **EP 4 381 923 B1**
(45) Veröffentlichungstag und Bekanntmachung des Hinweises auf die Patenterteilung: **19.08.2026**
(21) Anmeldenummer: 23198920.3
(22) Anmeldetag: 21.09.2023
(51) Int. Cl.: A01D 31/00, A01G 23/06

(54) **TIEFENLOCKERUNGS- UND RODEVORRICHTUNG ZUM LOCKERN VON KULTURBODEN UND ZUM RODEN VON GEHÖLZEN**
DEPTH LOOSENING AND CLEARING APPARATUS FOR LOOSENING CULTURE SOIL AND CLEARING WOODY ROOT
DISPOSITIF DE RELAXATION EN PROFONDEUR ET D'ARRACHAGE POUR LE DÉCOMPACTAGE DE SOLS DE CULTURE ET POUR ARRACHER DES ARBRES DE MARCHE

(30) Priorität: 24.10.2022 DE 102022128048
(43) Veröffentlichungstag der Anmeldung: 12.06.2024
(73) Patentinhaber: Pippert, Michael, 61352 Bad Homburg (DE)
(72) Erfinder: Pippert, Michael, 61352 Bad Homburg (DE); Daut, Robin, 67229 Gerolsheim (DE)
(74) Vertreter: DREISS Patentanwälte PartG mbB

(56) Entgegenhaltungen:
- DE-A1- 2 554 347
- DE-C1- 10 143 225
- FR-A1- 2 537 826
- US-A- 3 021 619
- US-A- 3 181 617
- US-A- 3 743 024
- US-A- 4 687 064
- OLIVER AGRO SRL: "FRUIT TREES NURSERY GRAPE VINE CUTTING PEPINIERE VIVEROS DIGGING MACHINE HARVEST ARRANCADORA", 17 June 2015 (2015-06-17), XP093134486, Retrieved from the Internet <URL:https://www.youtube.com/watch?v=Tja4ZdPwkyU&list=PLkeSQ1LbufH8fJC1IdyQQf6SS0JXuWI3O&index=12> [retrieved on 20240223]

## Beschreibung

Die Erfindung betrifft eine fahrbare Vorrichtung zum Tiefenlockern von Kulturböden und Roden von Gehölzen, insbesondere von Gehölzen, die in Reihen angeordnet sind. Solche in Reihen angeordneten Gehölze können beispielsweise Rebstöcke oder Bäume, wie zum Beispiel Apfel- oder Pfirsichbäume sein. Ein wichtiger Teil der Gehölze sind die Wurzeln.

Im Fall von Bäumen handelt es sich in der Regel um Bäume mit einer Höhe von weniger als sechs Metern. Meist sind die Bäume nicht höher als drei bis fünf Meter.

Aus der DE 25 54 347 A sind ein Verfahren und eine Vorrichtung zum Ernten von krautigen oder holzigen Pflanzen bekannt. Dabei werden die Bäume zunächst von einer Schar angehoben und anschließend von einem schräggestellten Förderband zu einer Pflanzenausbringvorrichtung 1 transportiert.

Aus der DE 101 43 225 C1 ist eine gattungsgemäße Vorrichtung zum Roden von Gehölzen bekannt. In der Beschreibungseinleitung dieser Patentschrift wird der Grund für das Roden zutreffend erläutert. Demnach müssen die auf z.B. einer Obstplantage in Reihe gepflanzten Obstbäume nach einer bestimmten Zeit entfernt und durch junge Obstbäume ersetzt werden, da das Obst der alten Bäume nicht mehr den gestellten Anforderungen genügt. Deshalb werden Apfelbäume etwa alle zwanzig Jahre erneuert. Entsprechendes gilt auch für Rebstöcke, die nach einer bestimmten Zeit gerodet und durch neue Rebstöcke ersetzt werden.

Bevor eine Obstplantage oder eine Rebfläche neu bepflanzt werden kann, müssen die dort vorhandenen Gehölze samt dem Wurzelstock entfernt werden. Dies geschieht oftmals mehr oder weniger manuell, was sehr arbeits- und kostenintensiv ist. Auch die für die notwendige Neupflanzung durchzuführende Bodenbearbeitung des Kulturbodens wird oftmals in mindestens zwei Schritten nacheinander separat durchgeführt. Dabei wird nach der Rodung der Kulturboden im ersten Schritt tiefengelockert, um langjährige Bodenverdichtungen aufzubrechen. Im zweiten Schritt wird vor der direkten Neupflanzung der obere Bereich des Kulturbodens mit Hilfe standardisierter Bodenbearbeitungs-Maschinen wie z.B. einer Fräse zur Neupflanzung vorbereitet.

Um die eigentliche Rode-Arbeit zu rationalisieren und zu vereinfachen, schlägt die DE 101 43 225 C1 eine fahrbare Vorrichtung zum Roden von Gehölzen vor, die als Vorbaugerät an einem Traktor oder einem anderen Nutzfahrzeug befestigt werden kann. Die Vorrichtung umfasst eine Niederdrückrolle, mit deren Hilfe der Obstbaum umgedrückt wird. Anschließend wird der umgedrückte Obstbaum durch eine Einzugsvorrichtung einer Schneide- oder Häckseleinrichtung zugeführt. In Fahrtrichtung gesehen hinter der Einzugsvorrichtung ist eine rotierende Rodungswalze angeordnet, welche quer zur Fahrtrichtung der Vorrichtung angeordnet ist. Die angetriebene Rodungswalze soll den Wurzelballen des umgedrückten Obstbaums aus dem Erdreich herausheben, so dass auch der Wurzelballen in die Zerkleinerungsvorrichtung gelangt.

Diese Vorrichtung hat unter anderem den Nachteil, dass beim Umdrücken der Obstbäume häufig der Stamm des Gehölzes abbricht, so dass Wurzel und Stamm nicht mehr miteinander verbunden sind. Das erschwert das Entfernen der Wurzeln aus dem Erdboden. Insbesondere bei veredelten Gehölzen, wie sie in Obstplantagen und Weinbergen die Regel sind, hat der Stamm des Gehölzes am Übergang zwischen der Unterlage und dem beim Veredeln auf die Unterlage aufgepfropften Trieb eine "Sollbruchstelle". Dort brechen die Stämme oft ab mit den oben genannten negativen Folgen.

FR 2 537 826 A1 offenbart eine Maschine zum Ernten von Pflanzen in einer Reihe.

Der Erfindung liegt die Aufgabe zugrunde, eine Rodevorrichtung bereitzustellen, welche die Nachteile des Standes der Technik vermeidet und dabei gleichzeitig eine Tiefenlockerung des Kulturbodens in einem gemeinsamen Arbeitsschritt gestattet. Außerdem soll sie es ermöglichen, die Wurzeln von dem Erdreich zu befreien, so dass am Ende das Gehölz samt Wurzeln, aber ohne anhaftende Erde, einer weiteren Verarbeitung zugeführt werden kann.

Diese Aufgabe wird durch eine Vorrichtung zum Roden von Gehölzen mit den Merkmalen des Anspruchs 1 und durch ein Verfahren gemäß Anspruch 21 gelöst.

Die Klemm-Fördereinrichtung ist in der Regel in Fahrtrichtung hinter der Einzugsvorrichtung angeordnet. Sie bewirkt unter anderem den Weitertransport des gerodeten Kulturgehölzes. Durch die erfindungsgemäße Umkehr der Anordnung von Einzugsvorrichtung und Tiefen-Lockerungsvorrichtung werden zunächst die Wurzeln des Gehölzes vom umgebenden Erdreich getrennt und das Erdreich gelockert. Erst anschließend wird das Gehölz an seinem Stamm mit Hilfe der Einzugsvorrichtung aus dem Erdreich gezogen.

Die Klemm-Fördereinrichtung transportiert das gerodete Gehölz mit den Wurzeln, an dem sich noch Erde befindet, in den Arbeitsbereich der Schlagwalzen. Die Schlagwalzen wirken auf die Wurzeln und das anhaftende Erdreich ein und entfernen die Erde von den Wurzeln. Anschließend ist das gerodete Gehölz "wurzelnackt". "Wurzelnackt" bedeutet, dass nur sehr wenig oder keine Erde mehr an den Wurzeln des Gehölzes hängt.

Das hat Vorteile bei der weiteren Verwendung der Gehölze. So kann das wurzelnackte Gehölz beispielsweise einem Häcksler zugeführt und zu Hackschnitzeln verarbeitet werden, die als Brennstoff genutzt werden können. Die Hackschnitzel von nicht wurzelnackten Gehölzen können wegen des hohen Anteils an Erde nicht als Brennstoff genutzt werden. Das vermindert ihren wirtschaftlichen Wert sehr stark.

Wurzelnackte Gehölze können auch zu Rundballen oder Holzbündeln gepresst oder samt den Wurzeln zu Holzscheiten verarbeitet werden, so dass das gesamte Gehölz einer energetischen Nutzung zugeführt werden kann.

Eine Niederdrückrolle, wie sie aus dem Stand bekannt ist, ist bei der erfindungsgemäßen Vorrichtung zum Roden nicht erforderlich. Vielmehr wird das zu rodende Gehölz durch die Einzugsvorrichtung mit seinen Wurzeln aus dem Boden gezogen, so dass der Stamm des Gehölzes auf Zug und nicht auf Biegung beansprucht wird. Dadurch wird das unerwünschte Abbrechen des Stamms wirksam vermieden. Das Roden von Gehölzen mit der erfindungsgemäßen Vorrichtung ist sehr effektiv und wirtschaftlich.

Es hat sich als vorteilhaft erwiesen, wenn die Drehachsen der Schlagwalzen im Wesentlichen parallel zu einer Transportrichtung der Klemm-Fördereinrichtung ausgerichtet sind.

In weiterer vorteilhafter Ausgestaltung umfasst die Einzugsvorrichtung zwei gegenläufig rotierende Räder. Mindestens eines der Räder ist mit einem Antrieb verbunden und die Drehachsen der Räder bilden mit der Fahrtrichtung der Vorrichtung einen Winkel kleiner 90°. Durch diese Schrägstellung der Drehachsen wird erreicht, dass die Einzugsvorrichtung das Gehölz mit den daran befindlichen und bereits gelockerten Wurzeln nach oben aus dem Erdboden herauszieht. Dadurch wird die Biegebeanspruchung des Stamms des Gehölzes zumindest stark reduziert. Bei der erfindungsgemäßen Tiefenlockerungs- und Rodevorrichtung werden der Stamm und mit ihm die bereits gelockerten Wurzeln aus dem Erdboden gezogen.

Es hat sich als vorteilhaft erwiesen, wenn der Winkel zwischen den Drehachsen der Räder der Einzugsvorrichtung und der Fahrtrichtung der Vorrichtung kleiner als 75° und bevorzugt kleiner als 60° ist. Er sollte in der Regel aber größer als 15° oder 30° sein. Besonders vorteilhaft ist es, wenn der Winkel einstellbar ist. Dann kann er an die Einsatzbedingungen vor Ort (insbesondere das zu rodende Gehölz) und die Fahrgeschwindigkeit angepasst werden.

Es ist vorteilhaft, wenn beide Räder der Einzugsvorrichtung angetrieben werden. Bei diesem Antrieb, wie auch bei den anderen Antrieben der erfindungsgemäßen Vorrichtung, ist es in der Regel vorteilhaft, wenn deren Drehzahl steuerbar ist, so dass die Drehzahl der rotierenden Räder an die die Arbeitsgeschwindigkeit der Tiefenlockerungs- und Rodevorrichtung, die Beschaffenheit des Bodens und die Art des zu rodenden Gehölzes (Obstbaum, Rebstock etc.) angepasst werden kann.

Sobald der Stamm des zu rodenden Gehölzes in den Spalt zwischen den Rädern der Einzugsvorrichtung gelangt, entsteht ein Reibschluss und die Räder ziehen das Gehölz samt den Wurzeln aus dem Boden.

Die Reifen der Räder sind in radialer Richtung nachgiebig , so dass durch das radiale Ausweichen der Reifen eine Anpassung des Spalts zwischen den Rädern an den Stammdurchmesser der zu rodenden Gehölze erfolgt. Besonders geeignet sind Räder mit einer Luftbereifung, wobei das Volumen beziehungsweise der Querschnitt der mit Luft gefüllten Reifen ausreichend groß bzw. hoch sein sollte.

Es hat sich als vorteilhaft erwiesen, wenn an den angetriebenen Schlagwalzen Schlagmittel in Form von Ketten, Seilen und/oder Stiften ausgebildet sind. Die Schlagmittel wirken auf die zwischen den Walzen befindlichen Wurzeln ein und klopfen die Erde von den Wurzeln.

Diese sehr einfache Lösung ist sehr effektiv. Sie führt dazu, dass vor allem die Hauptwurzeln von der anhaftenden Erde befreit werden. Teilweise werden die kleinen Wurzeln durch die Einwirkung der Schlagwalzen von den größeren Wurzeln abgerissen und bleiben in den Krümeln der von den Wurzeln getrennten Erde. Die Verwertung dieser feinen Wurzeln ist wirtschaftlich uninteressant.

Ein weiterer Vorteil ist darin zu sehen, dass die dickeren Teile der Wurzeln nach der Behandlung durch die Schlagwalzen relativ sauber sind. An den Wurzeln haftet keine oder nur wenig Erde. Das erleichtert die Weiterverarbeitung und die Vermarktung des gerodeten Gehölzes samt den Wurzeln deutlich.

Die erfindungsgemäße Klemm-Fördereinrichtung umfasst in einer vorteilhaften Ausgestaltung mindestens zwei parallel zueinander angeordnete umlaufende Fördermittel. Jedem Paar von Fördermitteln sind mehrere Paare von gegenüberliegend angeordneten Führungsrollen zugeordnet. Es können auch mehrere Paare von Fördermitteln vorhanden sein. Dementsprechend steigt die Zahl der Führungsrollen. Die Führungsrollen stützen und führen die Fördermittel so, dass zwischen ihnen ein Spalt entsteht. In diesem Spalt, dessen Breite variabel ist, wird ein gerodetes Gehölz mit seinem Stamm eingeklemmt. Dadurch entsteht ein Reibschluss zwischen den Fördermitteln und dem Stamm des Gehölzes. Infolgedessen wird das Gehölz mit den Fördermitteln von der Einzugsvorrichtung in Richtung der Schlagwalzen transportiert.

Die Fördermittel verlaufen oberhalb der Schlagwalzen, so dass die Fördermittel das Gehölz am Stamm fassen und klemmen. Sie transportieren auf diese Weise die unterhalb des Stamms angeordneten Wurzeln durch den Spalt zwischen den Schlagwalzen. Wenn die Wurzeln durch diesen Spalt transportiert werden, befinden sie sich im Arbeitsbereich der Schlagmittel, so dass das Erdreich von den Wurzeln in der zuvor beschriebenen Weise getrennt wird.

Damit die Fördermittel Gehölze mit unterschiedlichem Stammdurchmesser sicher fassen und transportieren können, sind die Führungsrollen in der Regel federbelastet, so dass der Spalt zwischen den beiden umlaufenden Fördermitteln ohne Gehölz beispielsweise zwei bis drei Zentimeter beträgt. Wenn ein Gehölz mit einem Stammdurchmesser von beispielsweise zehn Zentimetern von der Einzugsvorrichtung zu der Klemm-Fördereinrichtung gelangt, dann weichen die Führungsrollen seitlich aus und erweitern den Spalt zwischen den gegenüberliegenden Fördermitteln, so dass auch der Stamm mit dem beispielhaft erwähnten Stammdurchmesser von zehn Zentimetern zwischen den Fördermitteln geklemmt und reibschlüssig von diesen in Richtung der Schlagwalzen transportiert wird.

Die Fördermittel können als Seile, Riemen, Rundstahlketten, Rollenketten oder als Schubgliederband ausgebildet sein. Selbstverständlich sind auch Kombinationen von Seilen, Riemen, Ketten oder Schubgliederbändern denkbar. Prinzipiell ist jede Klemm-Fördereinrichtung geeignet.

Am Markt sind Klemm-Fördereinrichtungen bekannt, die Führungsschienen aufweisen in denen nachgiebige Klemmelemente geführt werden. Die Führungsschienen bilden zwei geschlossene "Ringe" oder Umlaufbahnen, die so geformt sind, dass oberhalb der Schlagwalzen ein nachgiebiger Spalt zwischen den in den Ringen umlaufenden Klemmelementen entsteht. Die Klemmelemente werden angetrieben. Sie klemmen die Gehölze an ihrem Stamm und transportieren deren Wurzeln durch den Spalt zwischen den Schlagwalzen. Bei diesen Klemm-Fördereinrichtungen können die Führungsschienen nahezu beliebig geführt werden, so dass ein raumgängiger Transport gewährleistet ist. Der Weg des Gehölzes durch die Vorrichtung zum Roden kann sehr frei gestaltet werden.

"Raumgängiger Transport" bedeutet, dass der räumliche Verlauf des Klemm-Spalts in weiten Grenzen frei gestaltet werden kann. Er kann gerade, einfach gekrümmt und mehrfach gekrümmt sein.

Es ist auch möglich, dass die Klemm-Fördereinrichtung zwei oder drei Paare von Fördermitteln umfasst, die unabhängig voneinander umlaufen und angetrieben werden. Dann ist es beispielsweise möglich, mit Hilfe eines ersten Paares von Fördermitteln das von der Einzugsvorrichtung begonnene Herausziehen des Gehölzes mit seinen Wurzeln zu unterstützen bzw. fortzusetzen. Dann können auch relativ tiefwurzelnde Gehölze mit Wurzeln, die bis zu Hundertzwanzig Zentimeter (1,2 Meter) unter die Erdoberfläche reichen, vollständig aus dem Erdreich herausgezogen werden.

Ein zweites Paar von Fördermitteln kann mehr oder weniger horizontal (d. h. parallel zur Fahrtrichtung der Tiefenlockerungs- und Rodevorrichtung) ausgerichtet werden. Es bewerkstelligt den anschließenden Transport des Gehölzes zu den Schlagwalzen, so dass die Wurzeln durch den Arbeitsbereich bzw. den Spalt zwischen den Schlagwalzen hindurchbewegt werden.

Es ist, insbesondere wenn als Fördermittel Seile, Riemen, Rundstahlketten oder Klemm-Fördereinrichtungen mit Führungsschienen verwendet werden, möglich, die Funktionen "Herausheben des Gehölzes aus dem Kulturboden" und "Transport der Wurzeln des Gehölzes in den Arbeitsbereich der Schlagwalzen" mit einem Paar von gegenläufig angetriebenen Fördermitteln innerhalb eines Paares von Fördermitteln zu realisieren.

Es kann aber auch vorteilhaft sein, diese beiden Funktionen voneinander zu trennen. Beispielsweise mit zwei oder sogar drei Paaren von angetriebenen Fördermitteln. Durch die Anordnung der Paare von Fördermittel und die entsprechende Anordnung der dazugehörigen Paare von Klemm-Fördereinrichtungen im Raum wird die gewünschte Transportbewegung der Gehölze von der Einzugsvorrichtung zu den Schlagwalzen und entlang der Schlagwalzen realisiert.

Die Klemm-Fördereinrichtung transportiert das gerodete Gehölz mit den Wurzeln, an dem sich noch Erdreich befindet, in den Arbeitsbereich der Schlagwalzen. Die Schlagwalzen wirken auf die Wurzeln und das anhaftende Erdreich ein und entfernen das Erdreich von den Wurzeln. Anschließend ist das gerodete Gehölz "wurzelnackt".

Die Einzugsvorrichtung, die Klemm-Fördereinrichtung(en) und die Schlagwalzen können optional von einem gemeinsamen Antrieb angetrieben werden. Alternativ ist es auch möglich, dass z.B. die Klemm-Fördereinrichtung(en) und/oder die Schlagwalzen von separaten Antrieben angetrieben werden. Als Antriebe sind beispielsweise Elektromotoren oder Hydraulikmotoren mit oder ohne Getriebe geeignet.

Insbesondere wenn das Fahrzeug, an welches die erfindungsgemäße Vorrichtung angekoppelt ist, über einen Hydraulikanschluss verfügt, können mit Hilfe dieses Hydraulikanschlusses der oder die Hydraulikmotoren mit unter Druck stehendem Hydrauliköl versorgt werden.

Alle Antriebe können entweder mit einer festen Betriebszahl arbeiten oder drehzahlgeregelt sein. Wenn die verschiedenen Baugruppen der Vorrichtung zum Roden, nämlich die Einzugsvorrichtung, die Klemm-Fördereinrichtung und die Schlagwalzen über separate drehzahlgeregelte Antriebe verfügen, können die Betriebspunkte der Baugruppen individuell gesteuert werden. Dadurch kann der Betriebspunkt jeder Baugruppe optimal an verschiedenste Gehölze und Arbeitsbedingungen angepasst werden.

Variable Drehzahlen von Einzugsvorrichtung, der oder den Klemm-Fördereinrichtungen und/oder den Schlagwalzen können auch erreicht werden, wenn ein schaltbares oder stufenlos verstellbares Getriebe zwischen dem jeweiligen Antrieb des Rades der Einzugsvorrichtung, der oder den Klemm-Fördereinrichtungen und/oder den Schlagwalzen vorgesehen ist. Ein Beispiel für ein stufenloses Getriebe (CVT = Continuously Variable Transmission) ist das sogenannte Positive Infinitely Variable - Getriebe (PIV-Getriebe).

Ebenfalls können variable Drehzahlen zwischen Einzugsvorrichtung und Klemm-Fördereinrichtung erreicht werden, wenn variable verstellbare und verschiebbare Kegelscheiben als Antriebsscheiben innerhalb der Klemm-Fördereinrichtung verbaut sind. Eine variable (stufenlose) Verstellung der Übersetzung zwischen Einzugsvorrichtung und Klemm-Fördereinrichtung wird über die Veränderung der Reibradien der variablen Antriebsscheibe und der Fördermittel der Klemm-Fördereinrichtung erreicht. Innerhalb einer solchen Ausführungsform arbeitete die Klemm-Fördereinrichtung drehzahlunabhängig von der Einzugsvorrichtung ebenfalls nach dem CVT-Prinzip (Continuously Variable Transmission) bzw. nach dem PIV-Prinzip (Positive Infinitely Variable).

Bei einer besonders vorteilhaften Ausführungsform werden zwei gegenüberliegend angeordnete und einen Klemm-Spalt bildenden Fördermittel der Klemm-Fördereinrichtung mit geringfügig unterschiedlichen Geschwindigkeiten angetrieben. Das hat zur Folge, dass der Stamm eines Gehölzes, der zwischen den Fördermitteln geklemmt ist, langsam um seine Längsachse rotiert. In Folge dessen rotieren auch die Wurzeln des in Richtung der Schlagwalzen transportierten Gehölzes, so dass die Wurzeln von allen Seiten von den Schlagmitteln der Schlagwalzen bearbeitet werden. Dadurch wird die Erde noch besser und effektiver von den Wurzeln entfernt.

Die unterschiedlichen Geschwindigkeiten können auf verschiedene Weise erreicht werden:
1: Beide Antriebsmotoren der Einzugsvorrichtung arbeiten mit unterschiedlichen Drehzahlen bei gleich großen starren Antriebsscheiben
2. Beide Antriebsmotoren der Einzugsvorrichtung arbeiten mit gleicher Drehzahl und die starren Antriebsscheiben sind unterschiedlich groß
3. Beide Antriebsmotoren der Einzugsvorrichtung arbeiten mit gleicher Drehzahl und die Reibradien der variablen Antriebsscheiben sind unterschiedlich eingestellt.

Die (Tiefen-)Lockerungsvorrichtung umfasst eine Trenneinrichtung und mindestens ein Hebe-und TiefenLockerungsschar, wobei die Arbeitstiefe der Tiefen-Lockerungseinrichtung auf bis zu 1,2 Meter einstellbar ist. Die Trenneinrichtung kann man sich wie ein im Querschnitt U-förmiges oder trapezförmiges "Messer" vorstellen, welches das Erdreich unterhalb und seitlich von den Wurzeln des zu rodenden Gehölzes durchtrennt. An dieser Trenneinrichtung können schräg nach hinten ansteigende Hebe- und Tiefenlockerungsschare angebracht werden, welche die Wurzeln nach dem Trennen anheben und nach oben aus dem Erdboden herausdrücken. Dadurch wird die Verbindung zwischen Wurzeln und dem umgebenden Erdreich aufgehoben. Die Wurzeln samt dem Stamm können anschließend durch die Einzugsvorrichtung weiter nach oben aus dem Erdboden herausgezogen werden.

Nach der Rodung einer Anlage wird diese auch mit neuen Kulturgehölzen bepflanzt. Die Hebe- und Tiefenlockerungsschare sorgen auch für eine tiefgründige Bodenlockerung, so dass nachgeschaltete Bodenbearbeitungsgeräte nur noch den Oberboden für die Neupflanzung vorbereiten müssen. Es kann somit ein Bearbeitungsschritt zwischen Roden und Neubepflanzung entfallen.

Das Trennen der Wurzeln vom umgebenden Erdreich und das erste Anheben der Wurzeln erfolgt durch die Trenneinrichtung und die schräggestellten Hebe- und Tiefenlockerungsschare, die von unten gegen die Wurzeln drücken und diese etwas anheben. Es werden lediglich Druckkräfte auf die Wurzeln ausgeübt. Durch dieses erste Anheben ist die Verbindung zwischen Wurzeln und Erdreich aufgehoben. Bei dem anschließenden weiteren Herausheben der Wurzeln aus dem Erdboden in der Einzugsvorrichtung sind nur relativ geringe Zugkräfte vom Stamm auf die Wurzeln zu übertragen. Dadurch ist ein Abreißen des Stamms von den Wurzeln nahezu ausgeschlossen.

In weiterer vorteilhafter Ausgestaltung umfasst die erfindungsgemäße Vorrichtung zum Roden einen nach unten offenen Rahmen mit zwei Längsträgern und mindestens einem ebenfalls unten offenen Bügel, der die Längsträger verbindet. In den meisten Fällen ist an beiden Enden der Längsträger ein solcher, ebenfalls nach unten offener Bügel vorgesehen. Dadurch ist es möglich, die Wurzeln ohne Kollisionen mit dem Rahmen aus dem Boden herauszuziehen und so weit anzuheben, dass die ebenfalls an dem Rahmen angeordneten Schlagwalzen die Wurzeln vom Erdreich befreien können.

Bei einer weiteren vorteilhaften Ausgestaltung sind an einem vorderen Ende des Rahmens zwei Räder vorgesehen. Diese Räder stützen das vordere Ende der Vorrichtung ab. Sie leiten auch die von der Tiefen-Lockerungsvorrichtung beim Anheben der Wurzeln auftretenden und in den Rahmen eingeleiteten Kräfte wieder in den Erdboden, so dass der Kraftfluss geschlossen wird.

Am hinteren Ende des Rahmens ist bevorzugt eine mechanische Schnittstelle zur Ankopplung an ein Fahrzeug vorhanden. Beispielsweise kann es sich hierbei um eine Vier-Punkt-Aufhängung an der Vorderseite eines Kommunalfahrzeugs oder eines Traktors handeln. Solche Schnittstellen sind dem Fachmann im Bereich der Agrartechnik bekannt, so dass auf eine detaillierte Beschreibung an dieser Stelle verzichtet werden kann.

Alternativ bzw. optional ist es auch möglich, dass im Anschluss an die Klemm-Fördereinrichtung und in Fahrtrichtung gesehen hinter den Schlagwalzen noch ein Transportband oder mehrere Transportbänder vorhanden sind. Diese Transportbänder sind in der Regel schräggestellt angeordnet, so dass an ihrem unteren Ende, das in Fahrtrichtung vorne ist, die Wurzeln des gerodeten Gehölzes aufliegen. Diese Transportbänder fördern das wurzelnackte Gehölz an das hintere Ende der Vorrichtung zum Roden, wo es einer weiteren Verarbeitung zugeführt werden kann.

Die Drehrichtung der Einzugsvorrichtung und/oder die Förderrichtung der Klemm-Fördereinrichtung ist umkehrbar. Das ist hilfreich im Falle einer Verstopfung, um die Vorrichtung wieder freizugbekommen.

Weitere Vorteile und vorteilhafte Ausgestaltungen der Erfindung sind der nachfolgenden Zeichnung, deren Beschreibung und den Patentansprüchen entnehmbar.

### Zeichnung

Es zeigen
- Figuren 1 bis 7: Seitenansichten verschiedener Ausführungsbeispiele erfindungsgemäßer Tiefenlockerungs- und Rodevorrichtungen;
- Figur 8: eine Ansicht von vorne auf das Ausführungsbeispiel der Figur 1;
- Figuren 9 bis 11: Ansichten von oben auf das Ausführungsbeispiel der Figur 2 in unterschiedlichen Arbeitsmodi; und
- Figur 12: Ansichten von oben auf das Ausführungsbeispiel der Figur 4.

### Beschreibung der Ausführungsbeispiele.

Das Grundkonzept aller in den Figuren dargestellten Tiefenlockerungs- und Rodevorrichtungen ist gleich. Die in den Figuren dargestellten Ausführungsbeispiele unterscheiden sich unter anderem bezüglich der Antriebe oder der Fördermittel.

Wegen der großen Übereinstimmungen werden für alle Bauteile in den Figuren durchgängig die gleichen Bezugszeichen verwendet. Die Erläuterungen, welche anhand einer Figur gemacht wurden, gelten entsprechend auch für die anderen Figuren.

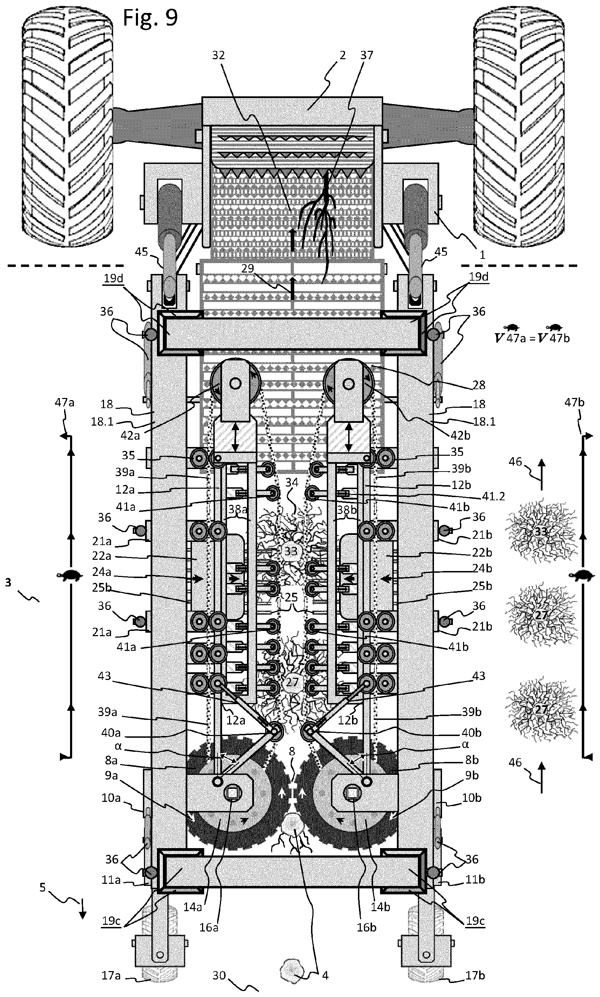

Die Tiefenlockerungs- und Rodevorrichtung 3 ist, wie sich zum Beispiel aus der Figur 9 ergibt, symmetrisch aufgebaut. Die Bauteile auf der in der Figur 9 linken Seite werden mit dem Index "a" gekennzeichnet. Die Bauteile auf der in der Figur 9 rechten Seite werden mit dem Index "b" gekennzeichnet. Diese Systematik wird durchgehend angewandt, auch wenn bisweilen in einer Figur nur die linke, nicht aber die rechte Seite dargestellt ist. Das hat zur Folge, dass in der Beschreibung der Index "b" auftaucht, obwohl die rechte Seite nicht dargestellt ist.

Wenn eine Baugruppe mehrfach vorhanden ist, dann werden die Baugruppen nummeriert. So zum Beispiel bei den Antriebsmotoren 15a, 15b, 16a, 16b, 15a₁/15a₂, 15b₁/15b₂, 16a₁/16a₂, 16b₁/16b₂, bei den Klemm- und Fördereinrichtungen 12a, 12b, 12a₁, 12b₁, 12a₂, 12b₂, sowie bei den Fördermitteln 39a, 39b, 39a₁, 39b₁, 39a₂, 39b₂.

Die Unterschiede zwischen den Ausführungsbeispielen betreffen vor allem die Antriebe (drehzahlvariabel oder mit fester Drehzahl) der Einzugsvorrichtung, der Klemm-Fördereinrichtung, deren Fördermittel und die Schlagwalzen. In den Figuren sind nur Klemm-Fördereinrichtungen mit umlaufenden Fördermitteln in Form von Riemen, Seilen, Ketten und Schubgliederbändern dargestellt. Klemm-Fördereinrichtungen mit Führungsschienen und darin geführten Klemmelementen sind nicht dargestellt. Sie sind dem Fachmann bekannt.

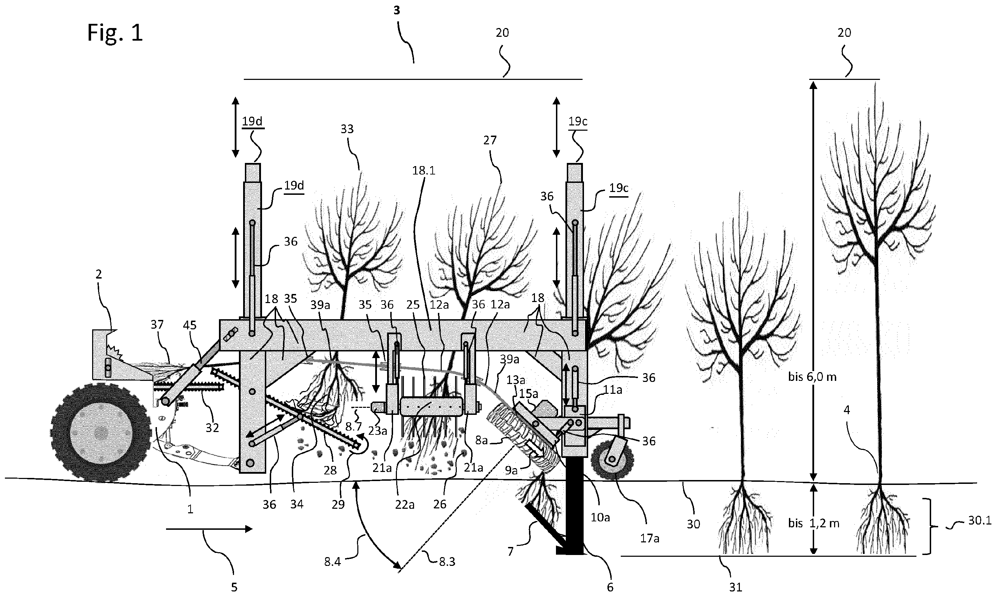

In der Figur 1 ist ein erstes Ausführungsbeispiel einer erfindungsgemäßen Tiefenlockerungs- und Rodevorrichtung 3 in einer Seitenansicht dargestellt. Mit dem Bezugszeichen 30 ist das (Kultur-) Bodenniveau oder die Erdoberfläche bezeichnet.

Mit 4 ist das zu rodende Gehölz dargestellt. Es kann ein Obstbaum mit einer Höhe 20 von bis zu sechs Metern sein. Nicht dargestellt sind auch andere Gehölze oder Rebstöcke, die ebenfalls mit der erfindungsgemäßen Tiefenlockerungs- und Rodevorrichtung 3 gerodet werden können.

Eine Fahrtrichtung der erfindungsgemäßen Tiefenlockerungs- und Rodevorrichtung 3 ist mit dem Bezugszeichen 5 bezeichnet. Auf der linken Seite der Figur 1 ist das vordere Ende eines Trägerfahrzeugs 1 dargestellt, an dem die Tiefenlockerungs- und Rodevorrichtung 3 angehängt ist.

Das Trägerfahrzeug 1 kann ein Kommunalfahrzeug sein, wie es beispielsweise von der österreichischen Firma Syntrac angeboten wird. Es kann aber auch ein Traktor oder ein anderes Motorgerät sein, das über eine geeignete mechanische Schnittstelle, bevorzugt mit einer Vier-Punkt-Aufhängung, verfügt.

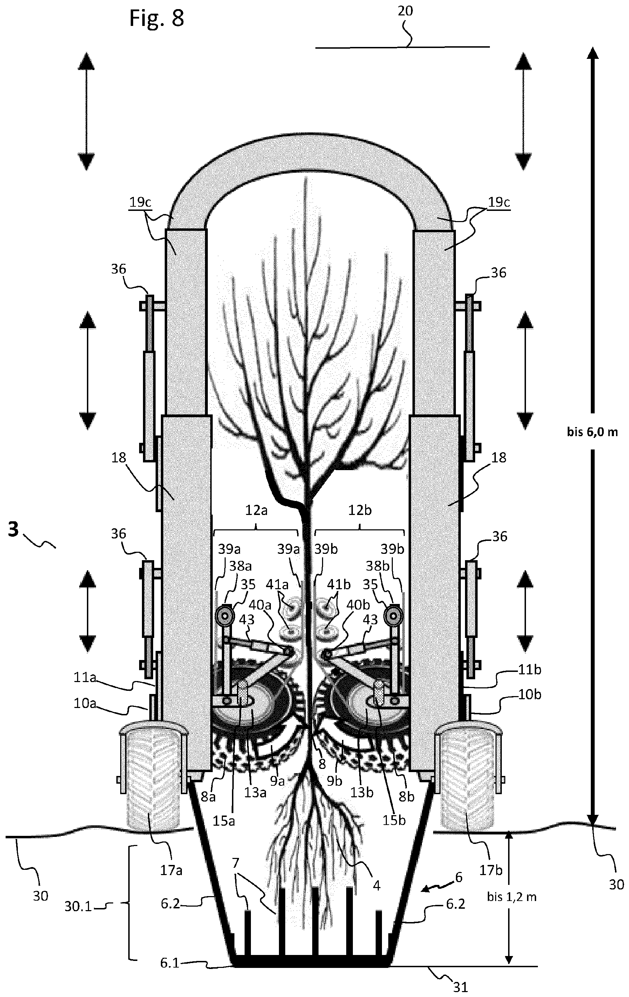

Die Vorrichtung 3 umfasst einen Rahmen 18 mit Längsträgern 18.1 und mindestens einen die Längsträger verbindenden Bügel 19c/19d. Der Rahmen 18 ist, wie sich beispielsweise aus der Figur 8 ergibt, unten offen. Die Verbindung zwischen den parallel zur Fahrtrichtung verlaufenden Längsträgern 18.1 erfolgt über die Bügel 19c und 19d. Die Bügel 19c/19d sind unten offen und oben geschlossen. Bei den dargestellten Ausführungsbeispielen ist an einem vorderen Ende ein erster Bügel 19c angeordnet. An dem hinteren Ende, dort wo die Tiefenlockerungs- und Rodevorrichtung 3 an das Trägerfahrzeug 1 angedockt ist, ist ein zweiter Bügel 19d vorgesehen.

Damit die Tiefenlockerungs- und Rodevorrichtung 3 Gehölze unterschiedlicher Wuchshöhe verarbeiten kann, sind die Bügel 19c und 19d teleskopierbar ausgeführt. Das bedeutet, dass die Bügel 19c und 19d entsprechend der Höhe der zu rodenden Gehölze mehr oder weniger weit nach oben ausgefahren werden. Selbstverständlich ist man bestrebt, den Bügel so wenig wie möglich nach oben auszufahren, um die Steifigkeit des Rahmens 18 zu maximieren. Das Ein- und Ausfahren der Bügel 19c und 19d kann mit Hilfe von Hydraulikzylindern 36 oder anderen Linearaktuatoren erfolgen.

An dem vorderen Ende des Rahmens 18 sind zwei Stützräder 17a und 17b angeordnet, welche einen erheblichen Teil der Gewichtskräfte der Tiefenlockerungs- und Rodevorrichtung 3 aufnehmen und in den oberen Bereich des Erdbodens einleiten. Die Räder 17a, 17b leiten auch die beim Roden an einer Tiefen-Lockerungsvorrichtung 6 auftretenden Kräfte wieder in das Erdreich ein.

Die Tiefen-Lockerungsvorrichtung 6 ist am vorderen Ende des Rahmens 18 angeordnet. Sie umfasst eine oder mehrere Hebe- und Tiefenlockerungsscharen 7. Der Aufbau und die Wirkungsweise der Tiefen-Lockerungsvorrichtung 6 sind aus der Zusammenschau, beispielsweise der Figuren 1 und 8, gut zu erkennen. Wie sich aus der Figur 8 ergibt, umfasst die Tiefen-Lockerungsvorrichtung 6 zwei seitlich angeordnete Trenneinrichtungen 6.2 sowie eine horizontale Trenneinrichtung 6.1, die parallel zu dem Kulturbodenniveau 30 und quer zur Fahrtrichtung 5 angeordnet ist. Die Trenneinrichtungen 6.1 und 6.2 arbeiten wie "Messer", die das Erdreich unterhalb und zu beiden Seiten der Wurzeln des zu rodenden Gehölzes zerschneiden.

Die Höhe, auf der diese Trennung erfolgt, ist in der Figur 1 durch eine Linie mit dem Bezugszeichen 31 dargestellt. Diese Linie 31 gibt gleichzeitig die Arbeitstiefe der horizontalen Trenneinrichtung 6.1 an.

Die Trenneinrichtungen 6.1 und 6.2 bilden zusammen einen trapezförmigen Querschnitt. Dadurch werden die Wurzeln des Gehölzes 4 seitlich und unten vom umgebenden Erdreich getrennt. Die seitlichen Trenneinrichtungen 6.2 und damit auch die an ihnen befestigte horizontale Trenneinrichtung 6.1 sind höhenverstellbar mit dem Rahmen 18 verbunden, so dass die Arbeitstiefe der Trenneinrichtung 6.1 in Abhängigkeit von der Größe des Wurzelballens des zu rodenden Gehölzes 4 eingestellt werden kann.

Die Einstellung der Arbeitstiefe der Trenneinrichtung 6.1 kann besonders komfortabel vorgenommen werden, wenn die seitlichen Trenneinrichtungen 6.2 beispielsweise mit Hilfe einer Linearführung an dem Rahmen 18 befestigt sind und die Höhenverstellung über doppeltwirkende oder einfachwirkende Hydraulikzylinder 36 erfolgt. Dann kann die Arbeitstiefe auch während der Fahrt verstellt werden.

Es liegt auf der Hand, dass man die Arbeitstiefe der Trenneinrichtung 6 an die Größe des Wurzelballens des zu rodenden Gehölzes 4 anpasst. Wenn beispielsweise die Wurzeln 40 Zentimeter unterhalb des Kulturbodenniveaus 30 enden, kann man die Arbeitstiefe der Trenneinrichtung 6.1 auf beispielsweise 45 Zentimeter einstellen. Dann werden die Wurzeln von dem umgebenden Erdreich getrennt, ohne dass viel Erde an den Wurzeln haften bleibt.

Die seitlichen Trenneinrichtungen 6.2 sind bei diesem Ausführungsbeispiel schräg gestellt. Das führt ebenso wie die Einstellbarkeit der Arbeitstiefe dazu, dass nur relative wenig Erdreich an den Wurzeln des zu rodenden Gehölzes 4 verbleibt.

Die Hebe- und Tiefenlockerungsscharen 7 können als schräg gestellte Bleche ausgebildet sein, die an der horizontalen Trenneinrichtung 6.1 angeschweißt sind. Durch die Schrägstellung der Hebe- und Tiefenlockerungsscharen 7 werden die zuvor von den Trenneinrichtungen 6.1 und 6.2 vom umgebenden Erdreich getrennten Wurzeln des Gehölzes 4 angehoben und in Richtung der Erdoberfläche 30 bewegt.

In den Bereichen zwischen zwei hintereinander angeordneten Gehölze 4 sind keine Wurzeln vorhanden. Dort lockern die Hebe-und Tiefenlockerungsscharen 7 den Kulturboden 30.1 auf. Wenn die Hebe- und Tiefenlockerungsscharen 7 auf die Wurzeln des nächsten Gehölzes 4 treffen, drücken die Hebe- und Tiefenlockerungsscharen 7 die Wurzeln in Richtung des Kulturbodenniveaus 30 nach oben.

Durch die vorgesehene Anordnung und beschriebene Arbeitsweise der Tiefen-Lockerungsvorrichtung 6 inklusive der Hebe- und Tiefenlockerungsscharen 7 wird der gesamte Kulturboden 30.1 während der Rodungsarbeit gleichzeitig tiefengelockert und von Bodenverdichtungen bis zur maximalen Arbeitstiefe 31 befreit.

In Fahrtrichtung gesehen hinter der Tiefen-Lockerungsvorrichtung 6 ist eine Einzugsvorrichtung 8 vorgesehen. Die wesentlichen Bauteile dieser Einzugsvorrichtung 8 sind zwei gegenläufig rotierende Räder 8a und 8b. Zwischen den Rädern 8a und 8b (siehe die Figuren 8 bis 12) ist ein kleiner Spalt vorhanden. Die Räder 8a und 8b sind angetrieben, so dass sie den Stamm eines Gehölzes 4, der in den Spalt zwischen den Rädern 8a und 8b kommt, reibschlüssig erfassen und nach oben aus dem Erdboden herausziehen.

Die Transportbewegung des Gehölzes nach oben wird dadurch bewirkt, dass die Drehachsen der Räder 8a und 8b und die zu den Räder 8a, 8b antriebsverbundenen Drehachsen der starren Antriebsscheiben 13a, 13b bzw. der variablen Antriebsscheiben 14a, 14b der Klemmfördereinrichtung 12a, 12b einen zur Fahrtrichtung 5 der Tiefenlockerungs- und Rodevorrichtung 3 bzw. zum Kulturbodenniveau 30 einen Winkel 8.4 einschließen, der kleiner ist als 90°. In den Figuren 1 bis 7 ist die Drehachse der Räder 8a und 8b mit 8.3 bezeichnet.

Die Schrägstellung der Drehachsen der Räder 8a und 8b (d. h. der Winkel 8.4) ist einstellbar. Die Räder 8a und 8b sind an Aufhängungen 10a bzw. 10b drehbar gelagert. Die Neigung der Aufhängungen 10a und 10b und mit Ihr der Winkel 8.4 können mittels Hydraulikzylindern 36 oder anderen Linearaktuatoren verstellt werden. Durch Verändern des Winkels 8.4 kann die Einzugsvorrichtung 8 an verschiedene Rodungsgehölze und Bodenverhältnisse angepasst werden.

Bei variabler Schrägstellung der Räder können nur Riemen, Rundstahlketten oder Seile als Fördermittel eingesetzt werden, wenn eine Klemm-Fördereinrichtung 12 (12a und 12b) mit einem Paar von Fördermitteln 39a, 39b vorgesehen ist. Diese Konfiguration ist in den Figuren 1, 2, 5, 6 und 7 dargestellt.

Bei der in den Figuren 1, 2, 5, 6 und 7 dargestellten Konfiguration verlaufen die Fördermittel 39a, 39b in der Seitenansicht nicht in einer Ebene, sie sind vielmehr abgewinkelt. Daher können bei dieser Konfiguration keine Rollenketten bzw. Schubgliederbänder als Fördermittel 39a, 39b eingesetzt werden.

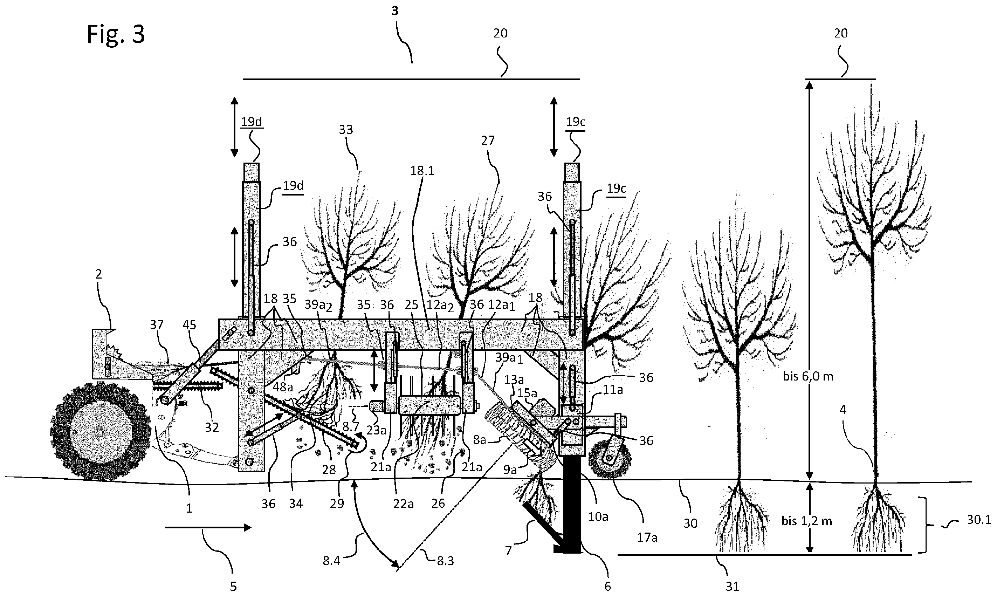

Wenn zwei oder mehr Paare von Klemm-Fördereinrichtungen eingesetzt werden (siehe z. B. die Bezugszeichen 12a₁, 12b₁, 12a₂, 12b₂ in den Figuren 3, 4 und 12), dann kann auch eine Rollenkette oder ein Schubgliedband als Fördermittel 39a₁, 39b₁, 39a₂, 39b₂ innerhalb der Klemm-Fördereinrichtungen eingesetzt werden, da jedes Paar von Fördermitteln 39a₁, 39b₁ bzw. 39a₂, 39b₂ einer Klemm-Fördereinrichtung 12a₁, 12b₁ bzw. 12a₂, 12b₂ in einer Ebene umläuft.

In den meisten Fällen sind die Drehzahl der Räder 8a, 8b und deren Drehrichtung 9a, 9b steuerbar. Die Drehzahl der Räder 8a, 8b wird in der Regel so auf die Fahrgeschwindigkeit der Tiefenlockerungs- und Rodevorrichtung 3 abgestimmt, dass das Gehölz 4 mehr oder weniger senkrecht aus dem Erdboden gezogen wird. Auch das verringert die Gefahr, dass der Stamm von den Wurzeln abgerissen wird, wenn das Gehölz 4 aus dem Erdboden herausgezogen wird.

In Fahrtrichtung 5 gesehen hinter den Rädern 8a und 8b befinden sich zwei Schlagwalzen 22a und 22b. Diese Schlagwalzen 22a und 22b sind drehangetrieben durch Antriebsmotoren 23a und 23b.

Die Drehachsen 8.7 der Schlagwalzen 22a und 22b verlaufen in etwa parallel zur Fahrtrichtung 5 der Tiefenlockerungs- und Rodevorrichtung 3 und parallel zu den Längsträgern 18.1 des Rahmens 18.

Wie sich aus den Figuren 9 bis 12 ergibt, ist zwischen den Schlagwalzen 22a und 22b ein Arbeitsraum oder Wirkbereich der Schlagwalzen vorhanden. Die Wurzeln des gerodeten Gehölzes 4 werden bei dem Ausführungsbeispiel mit einer Klemm-Fördereinrichtung 12a, 12b und einem Paar von Fördermitteln 39a, 39b in den Arbeitsbereich der Schlagwalzen 22a, 22b befördert (siehe die Figuren 9 bis 11).

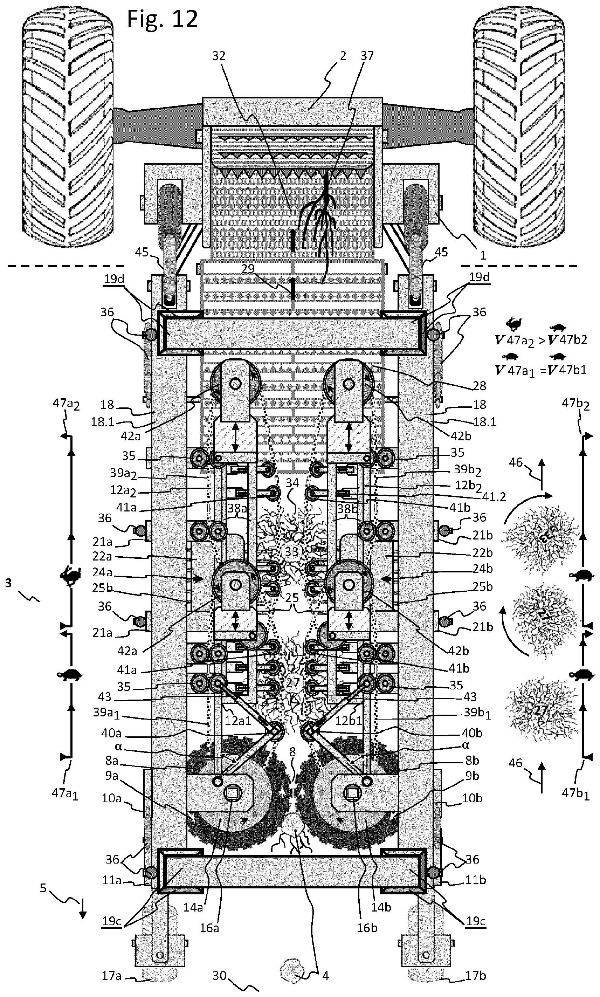

Wenn die Tiefenlockerungs- und Rodevorrichtung 3 zwei Paare von Klemm-Fördereinrichtungen 12a₁, 12b₁ bzw. 12a₂, 12b₂ aufweist, werden die Wurzeln des gerodeten Gehölzes 4 von der zweiten Klemm-Fördereinrichtung 12a₂, 12b₂ in den Arbeitsbereich der Schlagwalzen 22a, 22b befördert (siehe Figur 12).

Dort wird das an den Wurzeln haftende Erdreich mit Hilfe der Schlagwalzen 22a und 22b von den Wurzeln entfernt. Danach liegt das gerodete Gehölz "wurzelnackt" vor.

Das hat den großen Vorteil, dass das gesamte gerodete Gehölz mitsamt den Wurzeln z.B. zu Hackschnitzeln verarbeitet und energetisch genutzt werden kann.

Die Wirkungsweise der Schlagwalzen 22a und 22b wird weiter unten näher erläutert. Zunächst soll anhand eines Ausführungsbeispiels mit nur einer Klemm-Fördereinrichtung 12a, 12b, welche das gerodete Gehölz 27 von der Einzugsvorrichtung 8 in den Arbeitsbereich der Schlagwalzen 22a und 22b über die Transportrichtung 46 transportiert, deren Funktion anhand der Figuren 1 und 9 erläutert werden.

Das Klemm-Fördereinrichtungspaar 12a, 12b umfasst zwei gegenläufig umlaufende Fördermittel 39a und 39b. Die Fördermittel 39a, 39b können ein Paar von Seilen, insbesondere von Stahlseilen, Riemen oder Ketten, insbesondere Rundstahlketten sein. Diese Fördermittel 39a, 39b laufen gegensinnig um. Sie werden von den Führungsrollen 41a, 41b derart gestützt, dass ein gerodetes Gehölz in einen zwischen den Fördermitteln vorhandenen Spalt geklemmt wird, so dass ein Reibschluss zwischen Fördermitteln 39a, 39b und dem Stamm entsteht. Auf diese Weise wird der Stamm von dem Paar von Fördermitteln 39a, 39b mitgenommen und entgegen der Fahrtrichtung 5 über die Transportrichtung 46 nach hinten befördert. Der von den Führungsrollen 41a, 41b gestützte Bereich ist das Arbeitstrumm des Fördermittelpaares 39a, 39b.

Die Stützrollen 35 sind auf der den Führungsrollen 41a, 41b gegenüberliegenden Seiten der umlaufenden Fördermittel 39a, 39b angeordnet. Der von den Stützrollen 35 gestützte Bereich ist das Leertrumm der Fördermittel 39a, 39b. Stützrollen 35 können starr am Rahmen 18 montiert sein. Wie sich zum Beispiel aus der Figur 9 ergibt, umfasst die paarig ausgebildete Klemm-Fördereinrichtung 12a, 12b für auf jeder Seite einen separaten Aufhängungsrahmen 38a, 38b.

Die Fördermittel können aus paarweise und symmetrisch zur Längsachse der Tiefenlockerungs- und Rodevorrichtung 3 angeordneten Ketten, Riemen, Bändern, Schubgliederbändern oder Seilen bestehen. An dem Rahmen 18 bzw. dessen Längsträgern 18.1 sind mehrere Stützrollenpaare 35 vorgesehen, welche das im "Rücklauf" befindliche Leertrumm der Fördermittel stützen und führen, so dass ein sicherer und zuverlässiger Umlauf der Fördermittel gewährleistet ist. Die Stützrollenpaare 35 können auch an den Aufhängungsrahmen 38a, 38b angebracht sein.

Mit 27 ist der Stamm eines gerodeten Gehölzes 4 bezeichnet, an dessen Wurzeln noch Erdreich haftet. Mit 33 ist der Stamm eines gerodeten Gehölzes 4 bezeichnet, das den Arbeitsbereich der Schlagwalzen 22a und 22b bereits verlassen hat, so dass keine Erde mehr an den Wurzeln haftet. Mit dem Bezugszeichen 34 werden erdelose, wurzelnackte Wurzeln bezeichnet.

Wie sich aus den Figuren 9 bis 12 ergibt, sind die Führungsrollen 41a und 41b federbelastet am Aufhängungsrahmen 38a bzw. 38b angebracht, so dass sie eine Ausweichbewegung senkrecht zur Fahrtrichtung 5 ausführen können.

Dies ist in den Figuren 9 bis 12 durch Doppelpfeile angedeutet, von denen nur einer mit dem Bezugszeichen 41.2 versehen wurde. Dadurch ist gewährleistet, dass ein zu rodendes Gehölz 4 mit seinem Stamm 27 bzw. 33 zwischen den Fördermitteln geklemmt wird und aufgrund des dadurch entstehenden Reibschlusses von den Fördermitteln über die Transportrichtung 46 nach hinten, d.h. in Richtung der Schlagwalzen 22a bzw. 22b, transportiert wird. Die Transportvorrichtung 12 ist eine paarig ausgebildete Klemm-Fördereinrichtung 12a, 12b (siehe Figuren 9, 10 und 11). Sie kann auch zwei paarig ausgebildete Klemm-Fördereinrichtungen 12a₁, 12b₁, 12a₂, 12b₂ umfassen (siehe Figur 12).

Wie sich beispielsweise aus dem in der Figur 9 dargestellten Ausführungsbeispiel mit einer paarig ausgebildeten Klemm-Fördereinrichtung 12a, 12b ebenfalls ergibt, sind viele Paare von Führungsrollen 41a und 41b über die Transportstrecke der Klemm-Fördereinrichtung 12a, 12b jeweils gegenüberliegend angeordnet. Dadurch ist an jeder Stelle der Transportstrecke ein Reibschluss zwischen dem Fördermittelpaar 39a, 39b und dem Stamm 27 bzw. 33 des Gehölzes 4 gewährleistet.

Wenn statt einem Klemm-Fördereinrichtungspaar 12a, 12b zwei Paare von Klemm-Fördereinrichtungen 12a₁, 12b₁ und 12a₂, 12b₂ mit zwei Paaren von Fördermitteln 39a₁, 39b₁ und 39a₂, 39b₂ eingesetzt werden (siehe Figur 3, 4 und 12), dann verlaufen das Arbeitstrumm und das Leertrumm eines Fördermittelpaares 39a₁, 39b₁ bzw. 39a₂, 39b₂ in einer Ebene und es können auch Rollenketten bzw. Schubgliederbänder als Fördermittel eingesetzt werden.

Wenn, wie in Figur 3, 4 und 12 dargestellt, zwei Paare von Klemm-Fördereinrichtungen 12a₁, 12b₁ und 12a₂, 12b₂ mit zwei Paaren von Fördermitteln 39a₁, 39b₁ und 39a₂, 39b₂ eingesetzt werden, kann die Transportgeschwindigkeit 47a₂, 47b₂ des zweiten Paars von Fördermitteln 39a₂, 39b₂ geringer sein als die Transportgeschwindigkeit 47a₁, 47b₁ des ersten Paars von Fördermitteln 39a₁, 39b₁. Dadurch bleiben die Wurzeln länger im Arbeitsbereich der Schlagwalzen und die Wurzeln werden noch gründlicher von der Erde befreit.

Außerdem besteht die Möglichkeit, die Fördermittel des zweiten Paars von Fördermitteln 39a₂ und 39b₂ mit einer geringfügig unterschiedlichen Geschwindigkeit 47a₂, 47b₂ durch die Antriebsmotoren 48a und 48b anzutreiben. Das hat den Effekt, dass der Stamm 27 bzw. 33 langsam um seine Längsachse rotiert, wie dies in der Figur 12 angedeutet ist. Dann rotiert der Stamm 27 bzw. 33 des Gehölzes und mit ihm die Wurzeln während sie sich im Arbeitsbereich der Schlagwalzen 22a, 22b befinden. Das hat zur Folge, dass die Schlagmittel 25 von allen Seiten auf die Wurzeln einwirken.

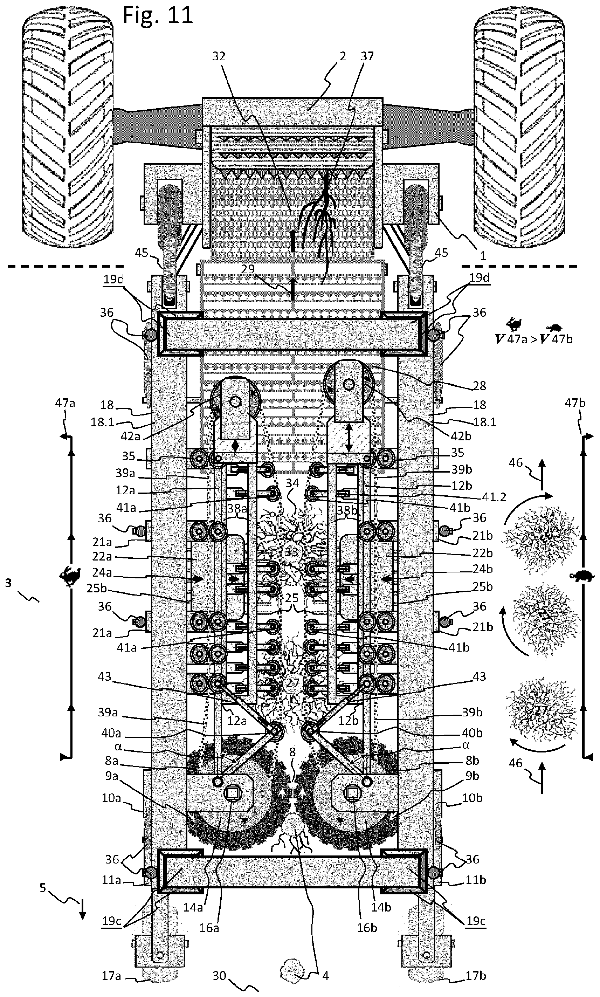

Der Effekt, dass der Stamm 27 bzw. 33 langsam um seine Längsachse rotiert kann beispielsweise auch dadurch erreicht werden, dass innerhalb einer Ausführungsform mit einem Klemm-Fördereinrichtungspaar 12a, 12b die Fördermittel 39a, 39b mit unterschiedlichen Reibradieneinstellungen der variablen Antriebsscheiben 14a, 14b angetrieben werden. So ist beispielsweise wie in Figur 11 dargestellt, die Transportgeschwindigkeit 47a des Fördermittels 39a größer als die Transportgeschwindigkeit 47b des Fördermittels 39b.

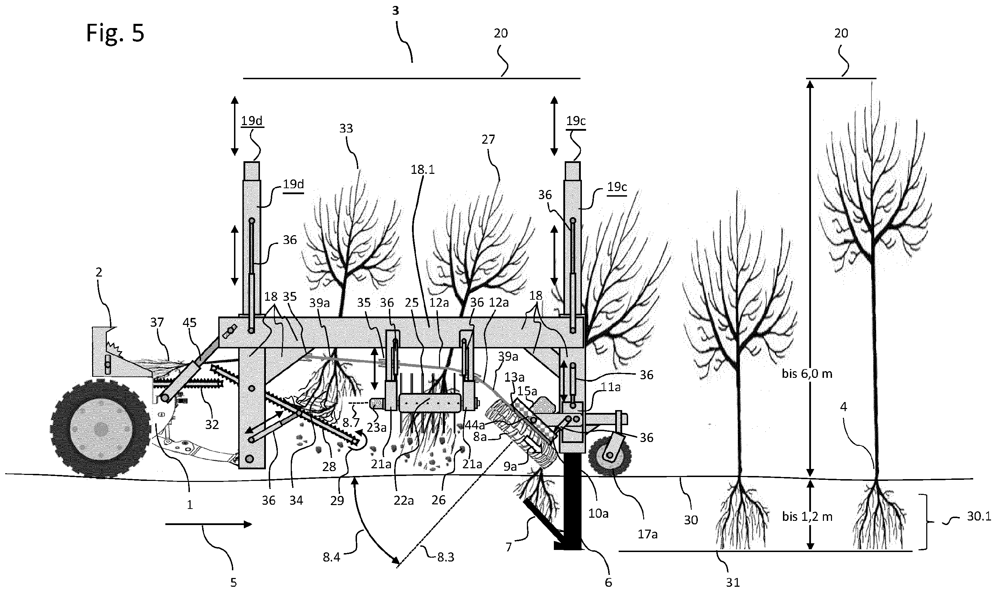

An dem in der Figur 5 dargestellten Ausführungsbeispiel werden die Fördermittel 39a, 39b (zum Beispiel ein Riemen, ein Stahlseil oder eine Rundstahlkette) von den Rädern 8a und 8b angetrieben. Das kann beispielsweise dadurch erfolgen, dass an den Rädern 8a und 8b ein stufenlos verstellbares PIV- oder CVT-Getriebe 44a, 44b angebracht wird, dessen Ausgangswelle, wie in Figur 5 dargestellt, eine Riemen- oder Kettenscheibe 13a, bzw. 13b antreibt. Die Fördermittel 39a, 39b laufen über die starre Riemen- oder Kettenscheibe 13a bzw. 13b. Dadurch wird die Drehbewegung der Räder 8a und 8b auf die Fördermittel 39a, 39b übertragen.

Durch den Einsatz eines PIV- oder CVT-Getriebes 44a, 44b kann die Transportgeschwindigkeit der Förderelemente 39a, 39b unabhängig von der Drehzahl der Räder 8a, 8b gesteuert werden. Je geringer die Transportgeschwindigkeit der Fördermittel 39a, 39b desto besser ist der Reinigungseffekt der Schlagmittel 25.

In der Figur 1 ist eine starre Antriebsscheibe 13a, 13b für Riemen, Stahlseil oder Rundstahlketten als Fördermittel für eine Klemm-Fördereinrichtung 12a, 12b dargestellt.

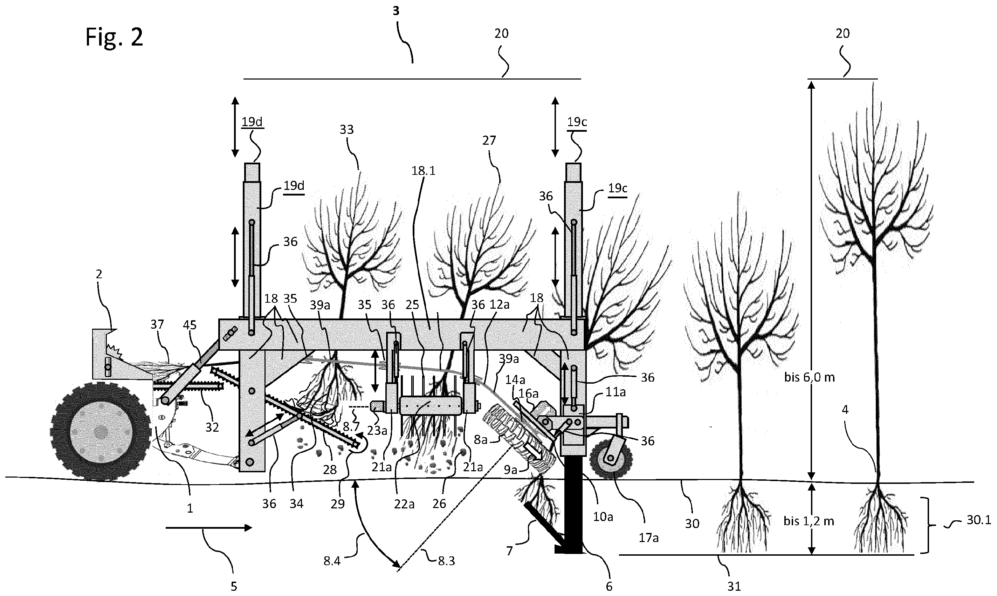

Die Figuren 2, 9, 10 und 11 betreffen ein Ausführungsbeispiel, das sich von der Figur 1 dadurch unterscheidet, dass sie eine variable verstellbare Antriebsscheibe 14a, 14b für Riemen, Stahlseil oder Rundstahlketten als Fördermittel innerhalb einer ein paarigen Klemm-Fördereinrichtung 12a, 12b aufweisen.

In der Figur 3 sind zwei Paare von Klemm-Fördereinrichtungen 12a₁, 12b₁ und 12a₂, 12b₂ mit zwei Paaren von Fördermitteln 39a₁, 39b₁ und 39a₂, 39b₂ dargestellt. Jeweils ein Paar von Fördermitteln 39a₁, 39b₁ und 39a₂, 39b₂ läuft in einer Ebene um, so dass auch Rollenketten oder Schubgliederbänder als Fördermittel eingesetzt werden können. Innerhalb der ersten Klemm-Fördereinrichtung 12a₁, 12b₁ ist eine starre Antriebsscheibe bzw. starre Kettenscheibe bzw. ein Kettenrad 13a, 13b dargestellt welche jeweils die Fördermittel des ersten Paares 39a₁, 39b₁ antreibt.

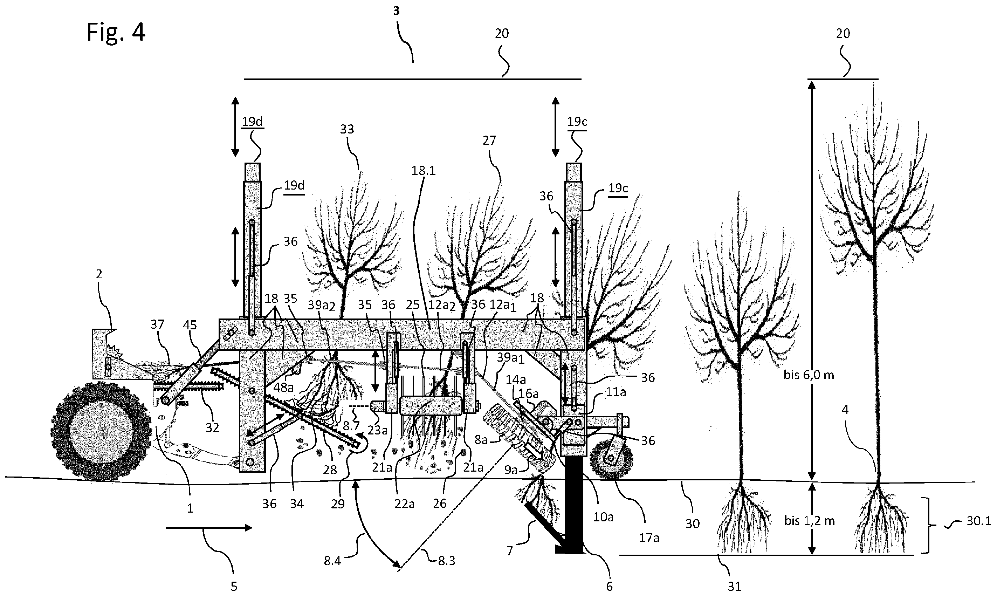

Die Figur 4 entspricht Figur 3 mit dem Unterschied, dass innerhalb der ersten Klemm-Fördereinrichtung 12a₁, 12b₁ eine variable verstellbare Antriebsscheibe 14a, 14b vorgesehen ist, welche jeweils die Fördermittel des ersten Paares 39a₁, 39b₁ antreibt.

Figur 5 entspricht Figur 1 nur, dass zwischen den Rädern 8a, 8b und der starren Antriebsscheibe bzw. der starren Kettenscheibe 13a, 13b welche die Fördermittel 39a, 39b antreibt, jeweils ein CVT- oder PIV-Getriebe 44a, 44b angeordnet ist. Dadurch kann die Drehzahl der starren Antriebsscheibe bzw. der starren Kettenscheibe 13a, 13b unabhängig von der Drehzahl der Räder 8a, 8b gewählt werden.

Bei den Ausführungsbeispielen wo innerhalb der Tiefenlockerungs- und Rodevorrichtung 3 ein Paar von Klemm-Fördereinrichtungen 12a, 12b vorgesehen ist, sind Umlenkrollen 42a und 42b am hinteren Ende vorgesehen (siehe Figur 9, 10 und 11).

Über diese Umlenkrollen 42a und 42b werden die Fördermittel 39a, 39b umgelenkt. Wie sich durch die in den Figuren 9, 10 und 11 angedeuteten Doppelpfeile ergibt, sind die Umlenkrollen 42a und 42b ebenfalls federbelastet oder druckbelastet verschiebbar, so dass stets gewährleistet ist, dass die Fördermittel 39a, 39b ausreichend gespannt sind und eine Überlastung der Fördermittel vermieden wird, beispielsweise, wenn sich ein besonders dicker Baumstamm zwischen dem Arbeitsbereich bzw. dem Transportbereich der Klemm-Fördereinrichtung 12a, 12b befindet.

Wie beispielsweise in den Figuren 9, 10 und 11 dargestellt, sind die federbelasteten oder druckbelasteten Umlenkrollen 42a und 42b ebenfalls notwendig um bei Verwendung von verstellbaren Antriebsscheiben 14a, 14b immer ausreichend wirkende Antriebsspannung auf die Fördermittel 39a, 39b zu garantieren. Auch wenn sich, wie beschrieben, unterschiedliche Baumdurchmesser zwischen dem Arbeitsbereich bzw. dem Transportbereich der Klemm-Fördereinrichtung 12a, 12b bewegen, muss ein Längenausgleich erfolgen.

So zeigt beispielsweise die Figur 9 den Betriebszustand von gleich weit geöffneten variablen Antriebsscheiben (variablen Kegelscheiben) 14a und 14b. Der Reibradius der variablen Antriebsscheibe 14a zu dem Fördermittel 39a ist gleich groß zum Reibradius der variablen Antriebsscheibe 14b zu dem Fördermittel 39b. Beide Fördermittel 39a und 39b stehen sehr nah am Drehpunkt der Antriebsscheiben 14a, 14b, weshalb die federbelasteten oder druckbelasteten Umlenkrollen 42a und 42b sehr weit ausgefahren sind.

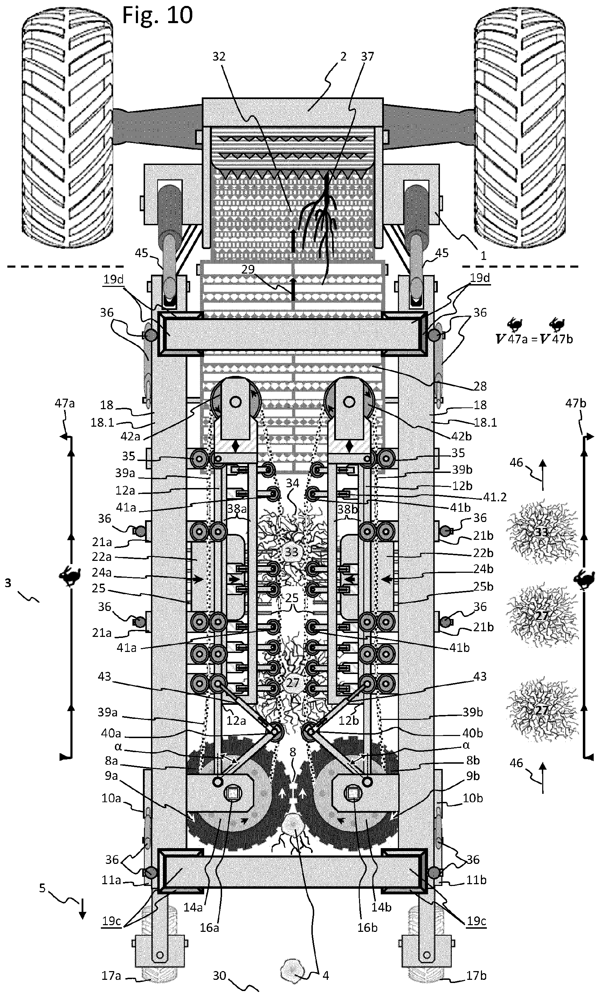

Die Figur 10 zeigt einen Betriebszustand von gleich eng geschlossenen variablen Antriebsscheiben (variablen Kegelscheiben) 14a und 14b. Beide Fördermittel 39a und 39b laufen mit einem großen Radius um den Drehpunkt der Antriebsscheiben 14a, 14b, weshalb die federbelasteten oder druckbelasteten Umlenkrollen 42a und 42b sehr eng eingefahren sind.

Die federnden Umlenkrollen 42a, 42b sind auch zum Längenausgleich erforderlich, wenn die Einzugsvorrichtung 8 eine Höhenverstellung 11a ,11b aufweist (Siehe Figur 1 oder 8) oder wenn eine Antriebsscheibe 14a, 14b mit veränderlichem Durchmesser zum Einsatz kommt.

Bei den Ausführungsbeispielen wo innerhalb der Tiefenlockerungs- und Rodevorrichtung 3 zwei Paare von Klemm-Fördereinrichtungen 12a₁, 12b₁ und 12a₂, 12b₂ vorgesehen sind, erfüllen die federnden Umlenkrollen 42a, 42b innerhalb jedem einzelnen Klemm-Fördereinrichtungspaar die beschriebenen Funktionen (siehe Figur 12).

Die federbelasteten Umlenkrollen 42a und 42b schaffen den notwendigen Längenausgleich innerhalb jeder Fördermittelausführungsvariante.

In den Figuren 9, 10 und 11 ist auch gut zu erkennen, dass im Anschluss an die Klemm-Fördereinrichtung 12a, 12b mit einem Paar von Fördermitteln 39a, 39b ein oder mehrere Transportbänder 28 und/oder 32 angeordnet sein können. Diese Transportbänder 28 und 32 besorgen durch die angezeigte Arbeitsrichtung 29 den Weitertransport des wurzelnackten Gehölzes 33 aus der Tiefenlockerungs- und Rodevorrichtung 3 heraus in eine auf dem Trägerfahrzeug 1 aufgesattelte Kompaktorvorrichtung 2, wo sie anschließend nach der Verdichtung einer weiteren Verwendung zugeführt werden können.

Damit sind zunächst die wichtigsten Baugruppen der erfindungsgemäßen Tiefenlockerungs-und Rodevorrichtung 3 beschrieben.

Anhand der weiteren Figuren sollen nun verschiedene Details der Baugruppen näher erläutert werden.

Zunächst wird anhand der Figur 1 der Antrieb der Räder 8a und 8b erläutert. Mit 15a ist in den Figuren 1, 3, 5 und 8 ein Antriebsmotor (Elektromotor oder Hydraulikmotor) dargestellt, welcher das Rad 8a antreibt. Auf der gegenüberliegenden Seite ist ein Antriebsmotor 15b vorhanden, der das Rad 8b antreibt. Mit den Bezugszeichen 15a, 15b sind Antriebsmotoren mit einer drehzahlstarren Antriebsscheibe 13a, 13b bzw. mit einer drehzahlstarren Kettenscheibe 13a, 13b bezeichnet (siehe Figur 1, 3, 5 und 8).

Wenn, wie in Figur 3 dargestellt zwei Paare von Klemm-Fördereinrichtungen 12a₁, 12b₁ und 12a₂, 12b₂ mit zwei Paaren von Fördermitteln 39a₁, 39b₁ und 39a₂, 39b₂ ausgeführt werden, dann kann neben einer drehzahlstarren Antriebsscheibe 13a, 13b auch ein sogenanntes "Kettenrad" 13a, 13b verwendet werden, das die Fördermittel (z. B. Rollenketten) des ersten Paares 39a₁, 39b₁ antreibt.

Mit den Bezugszeichen 16a, 16b werden Antriebsmotoren bezeichnet bei denen die Drehzahl der Antriebsscheibe 14a, 14b variabel ist (siehe Figur 2 und 4).

Dabei kann es sich um Hydraulikmotoren mit linearen Druckgebern handeln, die auf die variable Antriebsscheibe (variable Kegelscheibe)14a, 14b wirken. Durch die linearen Druckgeber der Antriebsmotoren 16a, 16b können die Reibradien der variablen Antriebsscheibe 14a, 14b und somit auch die Übersetzungsverhältnisse zwischen dem Fördermitteln 39a, 39b bzw. 39a₁, 39b₂ und den rotierenden Rädern 8a, 8b variabel (stufenlos) eingestellt werden. Um die erforderliche Anpresskraft für die Verstellung der variablen Antriebsscheibe 14a, 14b zu garantieren, können innerhalb der Antriebsmotoren 16a, 16b hydraulische Linear-Systeme eingesetzt sein (siehe Figur 2 und 4).

Die Drehzahl der Antriebe 15a und 15b kann entweder fest oder einstellbar sein, so dass entsprechend der Bodenbeschaffenheit und der Art des zu rodenden Gehölzes eine geeignete Drehzahl eingestellt werden kann. Auch ist die Drehzahl der Antriebe 16a und 16b entweder fest oder einstellbar. Hierdurch kann zusätzlich zu den verstellbaren Übersetzungsverhältnissen zwischen dem Fördermitteln 39a, 39b bzw. 39a₁, 39b₁ und den rotierenden Rädern 8a, 8b eine zu den Bodenverhältnissen und der Art des zu rodenden Gehölzes geeignete Drehzahl eingestellt werden.

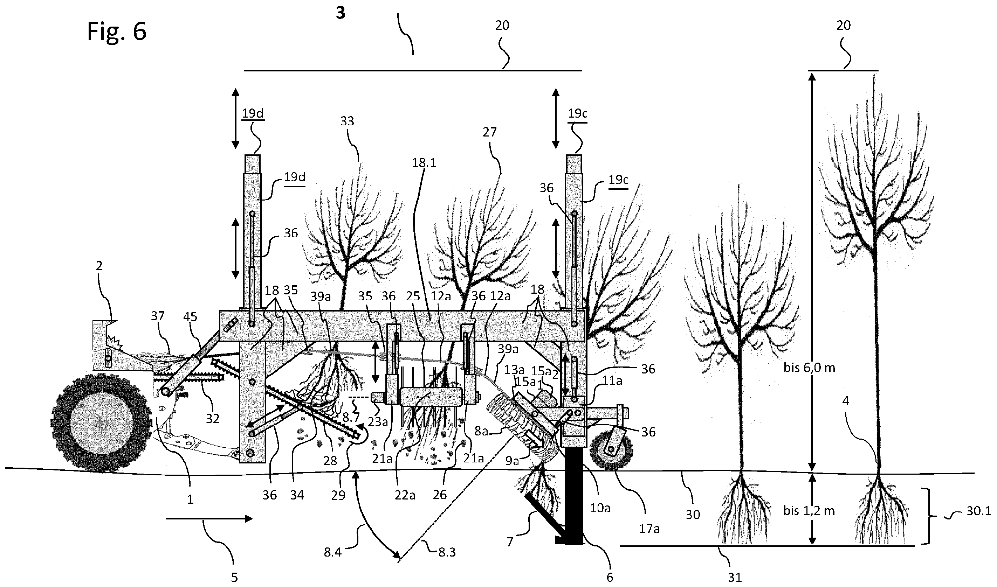

Auch ist es denkbar kaskadierte Antriebsmotoren ohne linearen Druckgeber 15a₁/15a₂ und 15b₁/15b₂ und mit Hohlwellensystem zur unabhängigen Drehzahlansteuerung der starren Antriebsscheibe bzw. der starren Kettenscheibe 13a, 13b und den Rädern 8a, 8b zu verwenden (siehe Figur 6).

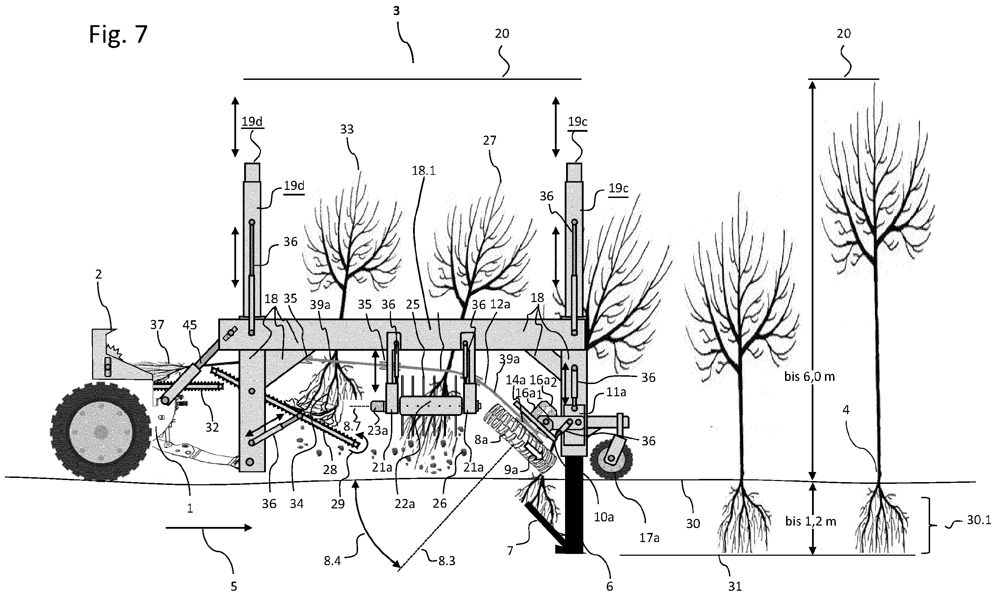

Ebenfalls ist es denkbar kaskadierte Antriebsmotoren mit linearen Druckgeber 16a₁/16a₂ und 16b₁/16b₂ und mit Hohlwellensystem zur unabhängigen Drehzahlansteuerung der drehzahlvariable Antriebsscheibe 14a, 14b und den Rädern 8a, 8b zu verwenden (siehe Figur 7).

Auch innerhalb dieser erläuterten kaskadierten Antriebe 15a₁/15a₂ und 15b₁/15b₂ bzw. 16a₁/16a₂ und 16b₁/16b₂ kann die Drehzahl entweder fest oder einstellbar sein.

Wie sich unter anderem aus den Figuren 1 bis 12 ergibt, sind bei dieser Konstruktion die Räder 8a und 8b als Luftreifen ausgeführt. Die Lagerung der Räder 8a, 8b ist fest mit dem Rahmen 18 verbunden. Wenn das Volumen der Reifen der Räder 8a, 8b ausreichend groß ist, dann können Stämme unterschiedlicher Durchmesser zwischen den Reifen bez. den Rädern 8a, 8b reibschlüssig aufgenommen werden. Der Reibschluss ist notwendig, um die zum Anheben des Gehölzes 4 erforderliche Kraft auf den Stamm zu übertragen.

Die Räder 8a, 8b bewegen den Stamm bezogen auf den Rahmen 18 schräg nach hinten und oben. Weil sich die Tiefenlockerungs-und Rodevorrichtung 3 nach vorne bewegt, resultiert daraus eine annähernd vertikale Bewegung des Gehölzes 4 nach oben. Dadurch wird das Gehölz 4 mit den gelockerten Wurzeln aus dem Erdreich gezogen.

Auch der Figur 8 kann man entnehmen, dass an den Rädern 8a und 8b jeweils eine starre Antriebs- oder Kettenscheibe 13a und 13b vorgesehen ist. Diese Antriebsscheiben 13a, 13b dienen dazu, die Fördermittel 39a, 39b anzutreiben. Demzufolge laufen auch die Fördermittel 39a, 39b gegenläufig zueinander.

Folgende Konstellationen sind in den Figuren dargestellt:
Figur 1: Fördermittelumlenkungsausführung mit starre Antriebsscheibe bzw. starrer Kettenscheibe 13a, 13b und mit einem Paar von Fördermitteln 39a, 39b die als Riemen, Stahlseil oder Rundstahlkette ausgeprägt sein können.
Figur 2: Fördermittelumlenkungsausführung mit variabler Antriebsscheibe (Positiv Infinitely Variable (PIV Antriebsscheibe)) 14a, 14b und mit einem Paar von Fördermitteln 39a, 39b die als Riemen, Stahlseil, oder Rundstahlkette ausgeprägt sein können.
Figur 3: Fördermittelumlenkungsausführung mit starre Antriebsscheibe bzw. starrer Kettenscheibe bzw. Kettenrad 13a, 13b und mit zwei Paar von Fördermitteln 39a₁, 39b₁ und 39a₂, 39b₂ die als Riemen, Stahlseil, Schubgliederbänder, Rollenketten oder Rundstahlkette ausgeprägt sein können.
Figur 4: Fördermittelumlenkungsausführung mit variabler Antriebsscheibe (Positiv Infinitely Variable (PIV Antriebsscheibe)) 14a, 14b und mit zwei Paar von Fördermitteln 39a₁, 39b₁ und 39a₂, 39b₂ die als Riemen, Stahlseil, Schubgliederbänder, Rollenketten oder Rundstahlkette ausgeprägt sein können.
Figur 5 Entspricht weitgehend Figur 1 mit dem Unterschied, dass zwischen Antriebsmotor 15a, 15b und der starren Antriebsscheibe bzw. der starren Kettenscheibe 13a, 13b ein Getriebe 44a, 44b zwischengeschaltet ist, um die Drehzahl zusätzlich zu einem drehzahlvariablen Antriebsmotor anpassen zu können. Das ermöglicht die Sicherung des Drehmoments bzw. eine optimale Umlaufgeschwindigkeit zwischen den Rädern 8a, 8b und den Fördermitteln 39a, 39b.
Figur 6 entspricht Figur 1 aber mit kaskadierten Antriebsmotor 15a₁/15a₂, 15b₁/15b₂ und Hohlwellensystem zur unabhängigen Drehzahlansteuerung der starren Antriebsscheibe bzw. der starren Kettenscheibe 13a, 13b und den Rädern 8a, 8b.
Figur 7 entspricht Figur 2 aber mit kaskadierten Antriebsmotor und linearen Druckgeber 16a₁/16a₂, 16b₁/16b₂ und Hohlwellensystem zur unabhängigen Drehzahlansteuerung der variablen Antriebsscheibe (Positiv Infinitely Variable (PIV Antriebsscheibe)) 14a, 14b und den Rädern 8a, 8b.
Figur 8 entspricht dem Ausführungsbeispiel der Figur 1 in einer Ansicht von vorne.
Figuren 9, 10 und 11 entspricht dem Ausführungsbeispiel der Figur 2 in einer Ansicht von oben.
Figur 12 entspricht dem Ausführungsbeispiel der Figur 4 in einer Ansicht von oben.

In der Figur 8 ist auch gut zu erkennen, dass zumindest das erste Paar von Führungsrollen 40a und 40b hydraulisch oder mechanisch (siehe das Bezugszeichen 40a und 40b) aufeinander zu bewegt werden, so dass die Übergabe eines Gehölzes 4 aus dem Arbeitsbereich der Räder 8a und 8b in den Transportbereich der Fördermittel 39a, 39b problemlos erfolgt. In der Figur 8 ist der Augenblick dargestellt in dem sowohl die Räder 8a und 8b als auch die Fördermittel 39a, 39b den Stamm des Gehölzes 4 reibschlüssig halten und transportieren.

Anhand der Figur 8 ist auch gut zu erkennen, dass die Drehachsen der Führungsrollen 41a und 41b so ausgerichtet sind, dass sie einerseits die zum Reibschluss erforderlichen horizontalen Kräfte, aber auch die Gewichtskräfte des Gehölzes aufnehmen können und somit ein sicheres Klemmen des Gehölzes zwischen den Fördermitteln 39a, 39b gewährleistet ist.

Anhand der Figur 8 ist auch zu erkennen, dass das erste Paar von Führungsrollen 40a, 40b an einer ersten Schwinge (ohne Bezugszeichen) angeordnet sind. Die in den Figuren 8 bis 12 dargestellten Stützrollen 35 sind an dem Aufhängungsrahmen 38a, 38b aufgehängt. Ebenfalls sind mechanisch-hydraulische Druckvorrichtungen 43 an dem Aufhängungsrahmen 38a, 38b angeordnet.

Die Druckvorrichtungen 43 können entweder Gasdruckzylinder, federbelastete Linearaktuatoren oder dergleichen sein. Durch die von der Druckvorrichtung 43 auf die Aufhängungsrahmen 38a, 38b ausgeübten Kräfte ist sichergestellt, dass die Fördermittel 39a, 39b, bzw. 39a₁, 39b₁ unter einer ausreichenden Vorspannung gehalten werden.

Das ist einerseits für den Reibschluss zwischen dem Gehölz 4 und dem Fördermittel 39a, 39b, 39a₁, 39b₁ wichtig. Andererseits ist es auch wichtig, dass ein Reibschluss oder ein Formschluss zwischen den Fördermitteln 39a, 39b bzw. 39a₁, 39b₁ und z. B. einer starren Antriebsscheibe 13a, 13b bzw. einer variablen Antriebsscheibe 14a, 14b an den Rädern 8a und 8b zuverlässig gewährleistet ist.

Wie sich aus der Figur 1 ergibt, verlaufen die Fördermittel 39a, 39b der Transportvorrichtung zunächst orthogonal zur Drehachse 8.3 des Rads 8a bzw. 8b. Dort wo die Schlagwalzen 22a und 22b angeordnet sind, verlaufen die Fördermittel 39a, 39b nahezu waagerecht bzw. parallel zur Drehachse der Schlagwalzen 22a, 22b. Die Fördermittel 39a, 39b verlaufen oberhalb der Schlagwalzen 22a, 22b, so dass sie den Stamm des Gehölzes 27 reibschlüssig erfassen und nach hinten transportieren, während die unterhalb des Stamms des Gehölzes 27 angeordneten Wurzeln in den Arbeitsbereich der Schlagwalzen 22a und 22b gelangen. Dies bedingt einen Richtungswechsel der Fördermittel 39a, 39b, der problemlos möglich ist, wenn diese als Seil oder Riemen ausgebildet sind.

Wenn die Fördermittel 39a, 39b als Ketten z. B als Rollenketten bzw. als Schubgliedbänder ausgebildet sind, dann umfasst die Klemm-Fördereinrichtung in der Regel zwei Paare von Fördermitteln 39a₁, 39b₁ und 39a₂, 39b₂, wie das in Figur 3, 4 und 12 dargestellt ist.

Anhand der Figur 1 und 9 lässt sich auch der Aufbau der Schlagwalzen 22a, 22b gut erläutern. An den zylindrischen Schlagwalzen 22a und 22b sind Schlagmittel 25 angeordnet. Diese Schlagmittel können beispielsweise kurze Kettenstücke, Seilstücke oder fest angeschweißte Stifte sein. Wenn die Schlagwalzen 22a und 22b in die jeweilige Drehrichtung 24a und 24b versetzt werden, dann schlagen die Schlagmittel 25 auf die Wurzeln und entfernen auf dieser Weise das Erdreich 26 von den Wurzeln des Gehölzes 27, so dass am Ende dieses Prozesses wurzelnacktes Kulturgehölz 33 vorliegt.

Die Schlagwalzen 22a und 22b werden bevorzugt über separate und bevorzugt drehzahlgeregelte Antriebsmotoren 23a und 23b angetrieben. Die Schlagwalzen 22a, 22b sind ebenfalls bevorzugt über einen höhenverstellbaren Teleskoprahmen 21a, 21b an dem Rahmen 18 angeordnet. Die Verstellung kann über Hydraulikzylinder 36 erfolgen.

Anhand der Figur 1 ist auch gut zu erkennen, wie die Transportbänder 28 und 32 das wurzelnackte Gehölz 33 weiter transportieren. In einem Übergangsbereich wird das wurzelnackte Gehölz 33 gleichzeitig von den Fördermitteln 39a, 39b der Klemm-Fördereinrichtung 12a, 12b und dem Transportband 28 befördert.

Bei Bedarf kann im Abschluss an das erste Transportband 28 noch ein zweites Transportband 32 vorgesehen sein, mit dessen Hilfe das wurzelnackte Gehölz 33 dann schließlich einer Weiterverarbeitung (nicht dargestellt) zugeführt wird. Die Übergabe 37 des wurzelnackt gerodeten Kulturgehölzes 33 an das Trägerfahrzeug 1 erfolgt im Bereich der hydraulischen Oberlenker 45 zur Kompaktorvorrichtung 2.

Die Ausrichtung/die Schrägstellung des ersten Transportbands 28 kann eingestellt werden. Dazu wird ein doppeltwirkender Hydraulikzylinder 36 mehr oder weniger weit ein- oder ausgefahren. Ein Drehpunkt des ersten Transportbands 28 befindet sich im Bereich des Bügels 19d. Es ist zeichnerisch dargestellt, hat jedoch kein Bezugszeichen.

Wie schon erwähnt, ist bei dem in der Figur 2 dargestellten Ausführungsbeispiel eine verstellbare Riemenscheibe (variable verstellbare Antriebsscheibe) 14a bzw. 14b vorgesehen. Durch die Verstellung der Reibradien der variablen Antriebsscheibe 14a bzw. 14b kann die Umlaufgeschwindigkeit der Fördermittel 39a, 39b unabhängig von der Drehzahl der Antriebsräder 8a und 8b eingestellt werden.

In der Figur 11 wird beispielsweise ein Arbeitsmodus der Figur 2 gezeigt wo die Antriebsmotoren 16a bzw. 16b mit gleicher Drehgeschwindigkeit auf die gegenläufig rotierende Räder 8a bzw. 8b, aber mit unterschiedlichen linearen Druckgebereinstellungen, wirken. Hierdurch sind die Reibradieneinstellungen der variablen Antriebsscheibe 14a bzw. 14b unterschiedlich, weshalb das Fördermittel 39a eine höhere Transportgeschwindigkeit hat als das Fördermittel 39b bei gleichbleibender gegenläufiger Drehgeschwindigkeit der Räder 8a bzw.8b.

Durch diesen in Figur 11 gezeigten Arbeitsmodus wird garantiert, dass das Gehölz 4 ohne Eigenrotation innerhalb der Einzugsvorrichtung 8 mehr oder weniger senkrecht aus dem Erdboden gezogen wird. Das verringert die Gefahr eines Wurzelabrisses vom Stamm deutlich. Erst bei der Übergabe des Gehölzes 4 aus dem Arbeitsbereich der Räder 8a und 8b in den Transportbereich der Fördermittel 39a und 39b kommt es zu Eigenrotation. Der Stamm 27 bzw. 33 rotiert innerhalb des Transportbereiches um seine Längsachse, so dass die Schlagmittel 25 von allen Seiten auf die Wurzeln einwirken können.

Dieser in Figur 11 beschriebene Arbeitsmodus kann auch erreicht werden, wenn beispielsweise jeweils zwischen den Rädern 8a und 8b und einer starren Antriebsscheibe bzw. einer starren Kettenscheibe 13a bzw. 13b ein CVT- oder PIV-Getriebe 44a, 44b angeordnet ist (siehe hierzu das Ausführungsbeispiel der Figur 5). Dadurch kann wie in Figur 11 dargestellt die Drehzahl der Fördermittel 39a und 39b unabhängig von der Drehzahl der Räder 8a und 8b gewählt werden.

In der Figur 4 ist, wie bereits erwähnt eine Variante dargestellt, bei der die Klemm-Fördereinrichtung zwei unabhängig voneinander agierende Paare von Fördermitteln 39a₁, 39b₁, und 39a₂, 39b₂ aufweist. Der erste Bereich der Klemm-Fördereinrichtung ist hier mit 12a₁ bzw. 12b₁ bezeichnet (siehe Figur 12). In diesem Bereich verlaufen die Fördermittel 39a₁ und 39b₁ parallel bzw. orthogonal zur Drehachse der Räder 8a und 8b. In einem zweiten Bereich 12a₂ und 12b₂ sind zweite Fördermittel 39a₂, 39b₂ vorhanden, die im Wesentlichen parallel zur Drehachse der Schlagwalzen 22a und 22b verläuft. Durch die Auftrennung der Klemm-Fördereinrichtung in zwei Transportbereiche mit separaten Fördermitteln kann der Richtungswechsel am Übergang zwischen den Bereichen besser aufgefangen werden. Insbesondere bei Ketten oder Schubgliederbänder als Fördermittel ist es schwierig, einen solchen Richtungswechsel mit nur einem Paar von Fördermitteln 39a, 39b zu erreichen.

## Patentansprüche

1. Fahrbare Vorrichtung zum Roden von Gehölzen (4) umfassend eine Einzugsvorrichtung (8) und eine Tiefen-Lockerungsvorrichtung (6) zum Lockern der Wurzeln eines Gehölzes (4), wobei die Tiefen-Lockerungsvorrichtung (6) in Fahrtrichtung (5) gesehen vor der Einzugsvorrichtung (8) angeordnet ist, wobei die Einzugsvorrichtung (8) zwei gegenläufig rotierende Räder (8a, 8b) umfasst, wobei mindestens eines der Räder (8a, 8b) mit einem Antrieb (15, 16) verbunden ist und die Drehachsen (8.3) der Räder mit der Fahrtrichtung (5) der Vorrichtung einen Winkel (8.4) kleiner 90° einschließen, und wobei die Vorrichtung eine Klemm-Fördereinrichtung (12a, 12b) umfasst, **dadurch gekennzeichnet, dass** die Räder (8a, 8b) Reifen aufweisen, die in radialer Richtung nachgiebig sind, so dass durch ein radiales Ausweichen der Reifen eine Anpassung eines Spalts zwischen den Rädern (8a, 8b) an einen Stammdurchmesser der zu rodenden Gehölze (4) erfolgt.

2. Vorrichtung nach Anspruch 1, **dadurch gekennzeichnet, dass** der oder die Antriebe (15, 15a, 15b, 16, 16a, 16b) die Räder (8a, 8b) der Einzugsvorrichtung (8) direkt oder über ein Getriebe antreiben.

3. Vorrichtung nach Anspruch 1 oder 2, **dadurch gekennzeichnet, dass** die Klemm-Fördereinrichtung (12a, 12b) und/oder Antriebsscheiben (13, 13a, 13b, 14, 14a, 14b) der Klemm-Fördereinrichtung (12a, 12b) mindestens einen eigenen Antrieb aufweisen.

4. Vorrichtung nach Anspruch 3, **dadurch gekennzeichnet, dass** die Antriebsscheiben (13, 13a, 13b, 14, 14a, 14b) der Klemm-Fördereinrichtung (12a, 12b) mit dem oder den Antrieben (15, 15a, 15b, 16, 16a, 16b) der Einzugsvorrichtung (8) antriebsverbindbar oder antriebsverbunden ist.

5. Vorrichtung nach Anspruch 4, **dadurch gekennzeichnet, dass** die Klemm-Fördereinrichtung (12a, 12b, 12ₐ₁, 12_{b1}) mindestens ein Paar umlaufender Fördermittel (39a, 39b, 39ₐ₁, 39_{b1}) umfasst, dass die Fördermittel (39a, 39b, 39ₐ₁, 39_{b1}) über die Antriebsscheiben (13a, 13b, 14a, 14b) laufen und von diesen angetrieben werden, und dass die Antriebsscheiben (13a, 13b, 14a, 14b) der Klemm-Fördereinrichtung (12a, 12b, 12ₐ₁, 12_{b1}) mit den Rädern (8a, 8b) der Einzugsvorrichtung (8) starr oder drehzahlvariabel verbunden sind.

6. Vorrichtung nach Anspruch 5, **dadurch gekennzeichnet, dass** die Antriebsscheiben (13a, 13b, 14a, 14b) der Klemm-Fördereinrichtung (12a, 12b, 12ₐ₁, 12_{b1}) und die Räder (8a, 8b) der Einzugsvorrichtung über kaskadierte Antriebsmotoren (15a₁/15a₂, 15b₁/15b₂, 16a₁/16a₂, 16b₁/ 16b₂) und zwei kraftunabhängige Wellen (Vollwelle und Hohlwelle) angetrieben werden.

7. Vorrichtung nach einem der Ansprüche 4 bis 6, **dadurch gekennzeichnet, dass** zwischen den Antriebsscheiben (13a, 13b, 14a, 14b) der Klemm-Fördereinrichtung (12a, 12b, 12ₐ₁, 12_{b1}) und den Rädern (8a, 8b) der Einzugsvorrichtung (8) ein Getriebe (44a, 44b) angeordnet ist.

8. Vorrichtung nach einem der Ansprüche 4 bis 7, **dadurch gekennzeichnet, dass** der wirksame Durchmesser der Antriebsscheiben (14a, 14b) einstellbar ist, um die Umlaufgeschwindigkeit der Fördermittel (39a, 39b, 39ₐ₁, 39_{b1}) der Klemm-Fördereinrichtung (12a, 12b, 12ₐ₁, 12_{b1}) einzustellen.

9. Vorrichtung nach einem der Ansprüche 3 bis 8, **dadurch gekennzeichnet, dass** die Räder (8a, 8b) der Einzugsvorrichtung (8), die Antriebsscheiben (13a, 13b, 14a, 14b) der Klemm-Fördereinrichtung (12a, 12b, 12a₁, 12a₂) und/oder die Klemm-Fördereinrichtung (12a, 12b, 12ₐ₁, 12_{b1}) über eine Winkelverstellung (8.4) winkelverstellbar sind.

10. Vorrichtung nach einem der Ansprüche 3 bis 9, **dadurch gekennzeichnet, dass** die Räder (8a, 8b) der Einzugsvorrichtung (8), die Antriebsscheiben (13a, 13b, 14a, 14b) der Klemm-Fördereinrichtung (12a, 12b, 12ₐ₁, 12_{b1}) und/oder die Klemm-Fördereinrichtung (12a, 12b, 12ₐ₁, 12_{b1}) über eine Höhenverstellung (11a, 11b) höhenverstellbar sind.

11. Vorrichtung nach einem der vorhergehenden Ansprüche, **dadurch gekennzeichnet, dass** die Klemm-Fördereinrichtung (12a, 12b, 12a₁, 12b₁) mehrere Paare von gegenüberliegend angeordneten Führungsrollen (41a, 41b) umfasst, und dass die Führungsrollen (41a, 41b) die Fördermittel (39a, 39b, 39ₐ₁, 39_{b1}) derart stützen und führen, dass zwischen den Fördermitteln (39a, 39b, 39ₐ₁, 39_{b1}) ein Spalt entsteht, und dass in dem Spalt ein Stamm (27) eines gerodeten Gehölzes (4) klemmbar ist.

12. Vorrichtung nach einem der vorhergehenden Ansprüche, **dadurch gekennzeichnet, dass** die Klemm-Fördereinrichtung (12a, 12b, 12ₐ₁, 12_{b1}, 12ₐ₂, 12_{b2}) das gerodete Gehölz (4) von der Einzugsvorrichtung (8) durch einen Spalt zwischen zwei angetriebenen Schlagwalzen (22a, 22b) fördert, und dass die Drehachsen (8.7) der Schlagwalzen (22a, 22b) im Wesentlichen parallel zu einer Transportrichtung (46) der Klemm-Fördereinrichtung (12a, 12b, 12ₐ₁, 12_{b1}, 12ₐ₂, 12_{b2}) ausgerichtet sind.

13. Vorrichtung nach Anspruch 12, **dadurch gekennzeichnet, dass** an den Schlagwalzen (22a, 22b) Schlagmittel (25) in Form von Ketten, Seilen und/oder Stiften ausgebildet sind, und dass die Schlagmittel (25) auf die zwischen den Schlagwalzen (22a, 22b) befindlichen Wurzeln einwirken und anhaftende Erde von den Wurzeln trennen.

14. Vorrichtung nach einem der vorhergehenden Ansprüche, **dadurch gekennzeichnet, dass** die Fördermittel (39a, 39b, 39ₐ₁, 39_{b1}, 39ₐ₂, 39_{b2}) als Seile, Riemen, Ketten und/oder als Schubgliederbänder ausgebildet sind.

15. Vorrichtung nach Anspruch 12 oder 13, **dadurch gekennzeichnet, dass** die Klemm-Fördereinrichtung (12a, 12b) ein Paar von Führungsschienen aufweist, dass in den Führungsschienen nachgiebige Klemmelemente geführt sind, dass die Führungsschienen zwei geschlossene "Ringe" oder Umlaufbahnen bilden, und dass Führungsschienen oberhalb der Schlagwalzen (22a, 22b) einen Klemmspalt bilden.

16. Vorrichtung nach einem der vorhergehenden Ansprüche, **dadurch gekennzeichnet, dass** die Tiefen-Lockerungsvorrichtung (6) eine horizontale Trenneinrichtung (6.1), zwei seitliche Trenneinrichtungen (6.2) und mindestens eine Hebe- und Tiefenlockerungsschar (7) umfasst, und dass eine Arbeitstiefe der Tiefen-Lockerungsvorrichtung (6) einstellbar ist.

17. Vorrichtung nach Anspruch 16, **dadurch gekennzeichnet, dass** die mindestens eine Hebe- und Tiefenlockerungsschar (7) schräggestellt ist.

18. Vorrichtung nach einem der vorhergehenden Ansprüche, **dadurch gekennzeichnet, dass** sie einen nach unten offenen Rahmen (18) mit zwei Längsträgern (18.1) und mindestens einem die Längsträger (18.1) verbindenden Bügel (19c, 19d) umfasst.

19. Vorrichtung nach Anspruch 18, **dadurch gekennzeichnet**, an einem vorderen Ende des Rahmens (18) zwei Räder (17a, 17b) vorgesehen sind, und dass an einem hinteren Ende des Rahmens (18) eine mechanische Schnittstelle zur Ankoppelung an ein Fahrzeug vorhanden ist.

20. Vorrichtung nach einem der vorhergehenden Ansprüche, **dadurch gekennzeichnet, dass** die Vorrichtung selbstfahrend ist.

21. Verfahren zum Tiefenlockern von Kulturboden (30.1) und dem Roden von Kulturgehölzen (4) mit einer Vorrichtung nach einem der voranstehenden Ansprüche umfassend die Verfahrensschritte:
- Tiefenlockern des Kulturbodens (30.1) und der Wurzeln von Kulturgehölzen (4) sowie Anheben des Kulturgehölzes (4),
- Herzausziehen der Wurzeln aus dem Kulturboden (30.1) durch Anheben des Kulturgehölzes (4) an seinem Stamm, und
- Entfernen der an den Wurzeln anhaftenden Erde mit Hilfe rotierender Schlagwalzen (22a, 22b).

22. Verfahren nach Anspruch 21, **dadurch gekennzeichnet, dass** die Wurzeln des aus dem Kulturboden (30.1) herausgezogenen Kulturgehölzes (27) mittels einer Klemm-Fördereinrichtung (12a, 12b) zwischen den Schlagwalzen (22a, 22b) hindurch transportiert wird.

23. Verfahren nach Anspruch 22, **dadurch gekennzeichnet, dass** der Stamm und mit ihm die Wurzeln des aus dem Kulturboden (30.1) herausgezogenen Kulturgehölzes (27) während des Transports zwischen den Schlagwalzen (22a, 22b) hindurch in Rotation versetzt wird.

## Claims

1. Drivable device for clearing woody plants (4), the device comprising an intake device (8) and a deep-loosening device (6) for loosening the roots of a woody plant (4), the deep-loosening device (6) being arranged in front of the intake device (8) when viewed in the driving direction (5), the intake device (8) comprising two counter-rotating wheels (8a, 8b), at least one of the wheels (8a, 8b) being connected to a drive (15, 16), and the rotation axes (8.3) of the wheels enclosing an angle (8.4) of less than 90° with the driving direction (5) of the device, and the device comprising a clamping conveying apparatus (12a, 12b), **characterized in that** the wheels (8a, 8b) have tires which are flexible in the radial direction such that a radial deflection of the tires causes a gap between the wheels (8a, 8b) to be adapted to a trunk diameter of the woody plants (4) to be cleared.

2. Device according to claim 1, **characterized in that** the drive or drives (15, 15a, 15b, 16, 16a, 16b) drive the wheels (8a, 8b) of the intake device (8) directly or via a transmission.

3. Device according to claim 1 or 2, **characterized in that** the clamping conveying apparatus (12a, 12b) and/or drive pulleys (13, 13a, 13b, 14, 14a, 14b) of the clamping conveying apparatus (12a, 12b) have at least one drive of their own.

4. Device according to claim 3, **characterized in that** the drive pulleys (13, 13a, 13b, 14, 14a, 14b) of the clamping conveying apparatus (12a, 12b) are drivably connectable or connected to the drive or drives (15, 15a, 15b, 16, 16a, 16b) of the intake device (8).

5. Device according to claim 4, **characterized in that** the clamping conveying apparatus (12a, 12b, 12ₐ₁, 12_{b1}) comprises at least one pair of circulating conveying means (39a, 39b, 39ₐ₁, 39_{b1}), **in that** the conveying means (39a, 39b, 39ₐ₁, 39_{b1}) run over the drive pulleys (13a, 13b, 14a, 14b) and are driven thereby, and **in that** the drive pulleys (13a, 13b, 14a, 14b) of the clamping conveying apparatus (12a, 12b, 12ₐ₁, 12_{b1}) are rigidly or speed-variably connected to the wheels (8a, 8b) of the intake device (8).

6. Device according to claim 5, **characterized in that** the drive pulleys (13a, 13b, 14a, 14b) of the clamping conveying apparatus (12a, 12b, 12ₐ₁, 12_{b1}) and the wheels (8a, 8b) of the intake device are driven via cascaded drive motors (15a₁/15a₂, 15b₁/15b₂, 16a₁/16a₂, 16b₁/16b₂) and two force-independent shafts (a solid shaft and a hollow shaft).

7. Device according to any of claims 4 to 6, **characterized in that** a transmission (44a, 44b) is arranged between the drive pulleys (13a, 13b, 14a, 14b) of the clamping conveying apparatus (12a, 12b, 12ₐ₁, 12_{b1}) and the wheels (8a, 8b) of the intake device (8).

8. Device according to any of claims 4 to 7, **characterized in that** the effective diameter of the drive pulleys (14a, 14b) is settable in order to set the circulation speed of the conveying means (39a, 39b, 39ₐ₁, 39_{b1}) of the clamping conveying apparatus (12a, 12b, 12ₐ₁, 12_{b1}).

9. Device according to any of claims 3 to 8, **characterized in that** the wheels (8a, 8b) of the intake device (8), the drive pulleys (13a, 13b, 14a, 14b) of the clamping conveying apparatus (12a, 12b, 12a₁, 12a₂), and/or the clamping conveying apparatus (12a, 12b, 12ₐ₁, 12_{b1}) are angularly adjustable via an angle adjustment (8.4).

10. Device according to any of claims 3 to 9, **characterized in that** the wheels (8a, 8b) of the intake device (8), the drive pulleys (13a, 13b, 14a, 14b) of the clamping conveying apparatus (12a, 12b, 12ₐ₁, 12_{b1}), and/or the clamping conveying apparatus (12a, 12b, 12ₐ₁, 12_{b1}) are height-adjustable via a height adjustment (11a, 11b).

11. Device according to any of the preceding claims, **characterized in that** the clamping conveying apparatus (12a, 12b, 12a₁, 12_{b1}) comprises a plurality of pairs of opposite guide rollers (41a, 41b), and **in that** the guide rollers (41a, 41b) support and guide the conveying means (39a, 39b, 39ₐ₁, 39_{b1}) in such a way that a gap is created between the conveying means (39a, 39b, 39ₐ₁, 39_{b1}), and **in that** a trunk (27) of a cleared woody plant (4) is clampable in the gap.

12. Device according to any of the preceding claims, **characterized in that** the clamping conveying apparatus (12a, 12b, 12ₐ₁, 12_{b1}, 12ₐ₂, 12_{b2}) conveys the cleared woody plant (4) from the intake device (8) through a gap between two driven impact rollers (22a, 22b), and **in that** the rotation axes (8.7) of the impact rollers (22a, 22b) are substantially parallel to a transport direction (46) of the clamping conveying apparatus (12a, 12b, 12ₐ₁, 12_{b1}, 12ₐ₂, 12_{b2}).

13. Device according to claim 12, **characterized in that** impact means (25) in the form of chains, ropes, and/or pins are formed on the impact rollers (22a, 22b), and **in that** the impact means (25) act on the roots located between the impact rollers (22a, 22b) and separate adhering soil from the roots.

14. Device according to any of the preceding claims, **characterized in that** the conveying means (39a, 39b, 39ₐ₁, 39_{b1}, 39ₐ₂, 39_{b2}) are in the form of ropes, belts, chains, and/or thrust belts.

15. Device according to claim 12 or 13, **characterized in that** the clamping conveying apparatus (12a, 12b) has a pair of guide rails, **in that** flexible clamping elements are guided in the guide rails, **in that** the guide rails form two closed "rings" or circulation paths, and **in that** guide rails above the impact rollers (22a, 22b) form a clamping gap.

16. Device according to any of the preceding claims, **characterized in that** the deep-loosening device (6) comprises a horizontal separating apparatus (6.1), two lateral separating apparatuses (6.2) and at least one lifting and deep-loosening share (7), and **in that** a working depth of the deep-loosening device (6) is settable.

17. Device according to claim 16, **characterized in that** the at least one lifting and deep-loosening share (7) is inclined.

18. Device according to any of the preceding claims, **characterized in that** it comprises a downwardly open frame (18) with two longitudinal beams (18.1) and at least one bracket (19c, 19d) connecting the longitudinal beams (18.1).

19. Device according to claim 18, **characterized in that** two wheels (17a, 17b) are provided at a front end of the frame (18), and **in that** a mechanical interface for coupling to a vehicle is present at a rear end of the frame (18).

20. Device according to any of the preceding claims, **characterized in that** the device is self-driving.

21. Method for deep-loosening cultivated soil (30.1) and for clearing cultivated woody plants (4) using a device according to any of the preceding claims, comprising the method steps of:
- deep-loosening the cultivated soil (30.1) and the roots of cultivated woody plants (4) as well as lifting the cultivated woody plants (4),
- pulling the roots out of the cultivated soil (30.1) by lifting the cultivated woody plant (4) at its trunk, and
- removing the soil adhering to the roots with the aid of rotating impact rollers (22a, 22b).

22. Method according to claim 21, **characterized in that** the roots of the cultivated woody plant (27) pulled out of the cultivated soil (30.1) are transported between the impact rollers (22a, 22b) by means of a clamping conveying apparatus (12a, 12b).

23. Method according to claim 22, **characterized in that** the trunk and with it the roots of the cultivated woody plant (27) pulled out of the cultivated soil (30.1) is set into rotation during the transport between the impact rollers (22a, 22b).

## Revendications

1. Dispositif mobile pour l'arrachage d'arbustes (4) comprenant un dispositif d'entraînement (8) et un dispositif de décompactage en profondeur (6) destiné à assouplir les racines d'un arbuste (4), le dispositif de décompactage en profondeur (6) étant disposé, vu dans la direction de déplacement (5), en avant du dispositif d'entraînement (8), le dispositif d'entraînement (8) comprenant deux roues (8a, 8b) tournant en sens opposé, au moins l'une des roues (8a, 8b) étant reliée à un moteur (15, 16) et les axes de rotation (8.3) des roues formant avec la direction de déplacement (5) du dispositif un angle (8.4) inférieur à 90°, et le dispositif comprenant un dispositif d'alimentation par pince (12a, 12b), **caractérisé en ce que** les roues (8a, 8b) sont équipées de pneus souples en direction radiale, de sorte que, par le dégagement radial des pneus, l'écartement entre les roues (8a, 8b) s'adapte au diamètre du tronc des arbustes (4) à arracher.

2. Dispositif selon la revendication 1, **caractérisé en ce que** le ou les moteurs (15, 15a, 15b, 16, 16a, 16b) entraînent les roues (8a, 8b) du dispositif d'entraînement (8) directement ou via une transmission.

3. Dispositif selon la revendication 1 ou 2, **caractérisé en ce que** le dispositif d'alimentation par pince (12a, 12b) et/ou les disques d'entraînement (13, 13a, 13b, 14, 14a, 14b) du dispositif d'alimentation par pince (12a, 12b) possèdent au moins leur propre moteur.

4. Dispositif selon la revendication 3, **caractérisé en ce que** les disques d'entraînement (13, 13a, 13b, 14, 14a, 14b) du dispositif d'alimentation par pince (12a, 12b) peuvent être raccordés en entraînement au(x) moteur(s) (15, 15a, 15b, 16, 16a, 16b) du dispositif d'entraînement (8) ou sont reliés en entraînement à ceux-ci.

5. Dispositif selon la revendication 4, **caractérisé en ce que** le dispositif d'alimentation par pince (12a, 12b, 12ₐ₁, 12_{b1}) comprend au moins une paire d'éléments de convoyage (39a, 39b, 39ₐ₁, 39_{b1}), que les éléments de convoyage (39a, 39b, 39ₐ₁, 39_{b1}) passent sur les disques d'entraînement (13a, 13b, 14a, 14b) et sont entraînés par ceux-ci, et que les disques d'entraînement (13a, 13b, 14a, 14b) du dispositif d'alimentation par pince (12a, 12b, 12ₐ₁, 12_{b1}) sont reliés de façon rigide ou à vitesse variable aux roues (8a, 8b) du dispositif d'entraînement (8).

6. Dispositif selon la revendication 5, **caractérisé en ce que** les disques d'entraînement (13a, 13b, 14a, 14b) du dispositif d'alimentation par pince (12a, 12b, 12ₐ₁, 12_{b1}) et les roues (8a, 8b) du dispositif d'entraînement (8) sont entraînés par des moteurs d'entraînement en cascade (15ₐ₁/15ₐ₂, 15_{b1}/15_{b2}, 16ₐ₁/16ₐ₂, 16_{b1}/16_{b2}) et par deux arbres indépendants de la transmission de puissance (arbre plein et arbre creux).

7. Dispositif selon l'une quelconque des revendications 4 à 6, **caractérisé en ce qu'**un engrenage (44a, 44b) est disposé entre les disques d'entraînement (13a, 13b, 14a, 14b) du dispositif d'alimentation par pince (12a, 12b, 12ₐ₁, 12_{b1}) et les roues (Ba, 8b) du dispositif d'entraînement (8).

8. Dispositif selon l'une quelconque des revendications 4 à 7, **caractérisé en ce que** le diamètre effectif des disques d'entraînement (14a, 14b) est réglable afin d'ajuster la vitesse périphérique des éléments de convoyage (39a, 39b, 39ₐ₁, 39_{b1}) du dispositif d'alimentation par pince (12a, 12b, 12ₐ₁, 12_{b1}).

9. Dispositif selon l'une quelconque des revendications 3 à 8, **caractérisé en ce que** les roues (8a, 8b) du dispositif d'entraînement (8), les disques d'entraînement (13a, 13b, 14a, 14b) du dispositif d'alimentation par pince (12a, 12b, 12ₐ₁, 12ₐ₂) et/ou le dispositif d'alimentation par pince (12a, 12b, 12ₐ₁, 12_{b1}) sont inclinables par l'intermédiaire d'un réglage d'angle (8.4).

10. Dispositif selon l'une quelconque des revendications 3 à 9, **caractérisé en ce que** les roues (8a, 8b) du dispositif d'entraînement (8), les disques d'entraînement (13a, 13b, 14a, 14b) du dispositif d'alimentation par pince (12a, 12b, 12ₐ₁, 12_{b1}) et/ou le dispositif d'alimentation par pince (12a, 12b, 12ₐ₁, 12_{b1}) sont réglables en hauteur au moyen d'un réglage en hauteur (lla, llb).

11. Dispositif selon l'une des revendications précédentes, **caractérisé en ce que** le dispositif d'alimentation par pince (12a, 12b, 12ₐ₁, 12_{b1}) comprend plusieurs paires de rouleaux de guidage disposés en vis-à-vis (41a, 41b), et **en ce que** les rouleaux de guidage (41a, 41b) supportent et guident les éléments de convoyage (39a, 39b, 39ₐ₁, 39_{b1}) de manière à créer un interstice entre les éléments de convoyage (39a, 39b, 39ₐ₁, 39_{b1}), et que dans cet interstice un tronc (27) d'un arbuste déraciné (4) peut être serré.

12. Dispositif selon l'une quelconque des revendications précédentes, **caractérisé en ce que** le dispositif d'alimentation par pince (12a, 12b, 12ₐ₁, 12_{b1}, 12ₐ₂, 12_{b2}) transporte l'arbuste déraciné (4) depuis le dispositif d'entraînement (8) au travers d'un interstice formé entre deux rouleaux à percussion entraînés (22a, 22b), et **en ce que** les axes de rotation (8.7) des rouleaux à percussion (22a, 22b) sont sensiblement parallèles à une direction de déplacement (46) du dispositif d'alimentation par pince (12a, 12b, 12ₐ₁, 12_{b1}, 12ₐ₂, 12_{b2}).

13. Dispositif selon la revendication 12, **caractérisé en ce que** des moyens de percussion (25) sous forme de chaînes, de cordes et/ou de tiges sont montés sur les rouleaux à percussion (22a, 22b), et **en ce que** les moyens de percussion (25) agissent sur les racines situées entre les rouleaux à percussion (22a, 22b) et séparent la terre adhérente des racines.

14. Dispositif selon l'une quelconque des revendications précédentes, **caractérisé en ce que** les éléments de convoyage (39a, 39b, 39ₐ₁, 39_{b1}, 39ₐ₂, 39_{b2}) sont réalisés sous forme de câbles, de courroies, de chaînes et/ou de bandes à maillons pousseurs.

15. Dispositif selon la revendication 12 ou 13, **caractérisé en ce que** le dispositif d'alimentation par pince (12a, 12b) comporte une paire de rails de guidage, que des éléments de serrage souples sont guidés dans les rails de guidage, que les rails de guidage forment deux "anneaux" fermés ou des trajectoires circulaires, et que, au-dessus des rouleaux à percussion (22a, 22b), les rails de guidage forment une fente de serrage.

16. Dispositif selon l'une quelconque des revendications précédentes, **caractérisé en ce que** le dispositif de décompactage en profondeur (6) comprend un dispositif de séparation horizontal (6.1), deux dispositifs de séparation latéraux (6.2) et au moins un outil de levage et de décompactage (7), et que la profondeur de travail du dispositif de décompactage en profondeur (6) est réglable.

17. Dispositif selon la revendication 16, **caractérisé en ce qu'**au moins un outil de levage et de décompactage (7) est incliné.

18. Dispositif selon l'une quelconque des revendications précédentes, **caractérisé en ce qu'**il comprend un châssis ouvert vers le bas (18) avec deux longerons (18.1) et au moins un arceau (19c, 19d) reliant les longerons (18.1).

19. Dispositif selon la revendication 18, **caractérisé en ce que** deux roues (17a, 17b) sont prévues à une extrémité avant du châssis (18), et qu'à une extrémité arrière du châssis (18) est prévue une interface mécanique pour l'accouplement à un véhicule.

20. Dispositif selon l'une quelconque des revendications précédentes, **caractérisé en ce que** le dispositif est automoteur.

21. Procédé pour le décompactage en profondeur du sol cultivé (30.1) et pour l'arrachage des arbustes cultivés (4) à l'aide d'un dispositif selon l'une quelconque des revendications précédentes, comprenant les étapes suivantes :
- Décompactage en profondeur du sol cultivé (30.1) et des racines des arbustes cultivés (4) ainsi que soulèvement de l'arbuste cultivé (4),
- Arrachage des racines du sol cultivé (30.1) en soulevant l'arbuste cultivé (4) par son tronc, et
- Élimination de la terre adhérant aux racines au moyen de rouleaux à percussion rotatifs (22a, 22b).

22. Procédé selon la revendication 21, **caractérisé en ce que** les racines de l'arbuste cultivé (27) extrait du sol cultivé (30.1) sont transportées entre les rouleaux à percussion (22a, 22b) au moyen d'un dispositif d'alimentation par pince (12a, 12b).

23. Procédé selon la revendication 22, **caractérisé en ce que** le tronc et, avec lui, les racines de l'arbuste cultivé (27) extrait du sol cultivé (30.1) sont mis en rotation pendant le transport entre les rouleaux à percussion (22a, 22b).
